# EUROPEAN PATENT APPLICATION

(11) **EP 4 645 804 A1**
(43) Date of publication of application: **05.11.2025**
(21) Application number: 23909458.4
(22) Date of filing: 11.10.2023
(51) Int. Cl.: H04L 41/16

(54) **ASSISTANCE INFORMATION REPORTING METHOD AND APPARATUS**

(30) Priority: 30.12.2022 CN 202211735444
(71) Applicant: Datang Mobile Communications Equipment Co., Ltd., Beijing 100085 (CN)
(72) Inventor: YAN, Xue, Beijing 100085 (CN); LIANG, Jing, Beijing 100085 (CN); ZENG, Erlin, Beijing 100085 (CN); WANG, Da, Beijing 100085 (CN); FEI, Yongqiang, Beijing 100085 (CN)
(74) Representative: Ipsilon
(86) International application number: PCT/CN2023/124022
(87) International publication number: WO 2024/139524

(57) **Abstract**

Embodiments of the present disclosure relate to the technical field of communications, and provide an assistance information reporting method and apparatus. The assistance information reporting method comprises: sending first assistance information to a network side device, the first assistance information comprising at least part of information required for implementing a model management process of artificial intelligence (AI) and/or machine learning (ML).

## Description

### CROSS-REFERENCES TO RELATED APPLICATIONS

The present application claims priority to Chinese patent application No. 202211735444.0 filed on December 30, 2022, entitled "Assistance Information Reporting Method and Apparatus", which is hereby incorporated by reference in its entirety.

### FIELD

The present application relates to the field of communications, and in particular, to methods and apparatuses for reporting assistance information.

### BACKGROUND

With continuous development of technology, an artificial intelligence (AI) and/or machine learning (ML) technology is widely used in production and life.

An AI and/or ML may be applied in a radio communication system. However, there are many differences between an architecture of the AI and/or ML and an architecture of the radio communication system. It is unclear how to implement a relevant function or procedure of the AI and/or ML in the radio communication system, resulting in poor practicality of the AI and/or ML in the radio communication system.

### BRIEF SUMMARY

Embodiments of the present application provide methods and apparatuses for reporting assistance information, to solve a defect that an artificial intelligence (AI) and/or machine learning (ML) has poor practicality in a radio communication system in the related art, and improve practicality of the AI and/or ML in the radio communication system.

An embodiment of the present application provides a method for reporting assistance information, performed by a terminal, including:
transmitting first assistance information to a network side device, where the first assistance information includes at least part of information required for implementing a model management procedure for an artificial intelligence (AI) and/or machine learning (ML).

In an embodiment, before transmitting the first assistance information to the network side device, the method further includes:
receiving first configuration information transmitted from the network side device, where the first configuration information is configuration information required by the terminal to report the first assistance information to the network side device.

In an embodiment, the first configuration information includes one or more of:
first indication information, where the first indication information is used to indicate that the network side device supports reporting of the first assistance information; or
first timer information, where a first timer is used to control the terminal to report the first assistance information.

In an embodiment, transmitting the first assistance information to the network side device includes one or more of:
starting a first timer; or
transmitting the first assistance information to the network side device.

In an embodiment, before transmitting the first assistance information to the network side device, the method further includes one or more of:
determining that the terminal expects to report data collected by the terminal;
determining that the terminal expects the network side device to transmit data collected by the network side device;
determining that the terminal expects to implement, at the terminal or the network side device, a model training procedure;
determining that the terminal expects to implement, at the terminal or the network side device, a model monitoring procedure;
determining that the terminal expects to implement, at the terminal or the network side device, a model update procedure;
determining that the terminal expects to change a model of the AI and/or ML;
determining to report model information of the AI and/or ML expected or preferred by the terminal;
determining that the terminal expects to update a model of the AI and/or ML;
determining that the terminal expects to use an AI and/or ML-based way or a non-AI and/or ML-based way;
determining that the terminal expects to fall back a model of the AI and/or ML;
determining that the network side device configures the terminal to report the first assistance information; or
determining that the first timer is not running.

In an embodiment, the first assistance information includes one or more of:
first sub-assistance information, where the first sub-assistance information is used to characterize that the terminal expects to report data collected by the terminal;
second sub-assistance information, where the second sub-assistance information is used to characterize that the terminal expects the network side device to transmit data collected by the network side device;
third sub-assistance information, where the third sub-assistance information is used to characterize that the terminal expects to implement, at the terminal, a model training procedure, or the third sub-assistance information is used to characterize that the terminal expects to implement, at the network side device, a model training procedure;
fourth sub-assistance information, where the fourth sub-assistance information is used to characterize that the terminal expects to implement, at the terminal, a model monitoring procedure, or the fourth sub-assistance information is used to characterize that the terminal expects to implement, at the network side device, a model monitoring procedure;
fifth sub-assistance information, where the fifth sub-assistance information is used to characterize that the terminal expects to implement, at the terminal, a model update procedure, or the fifth sub-assistance information is used to characterize that the terminal expects to implement, at the network side device, a model update procedure;
sixth sub-assistance information, where the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, where the seventh sub-assistance information is used to characterize model information of the AI and/or ML expected or preferred by the terminal;
eighth sub-assistance information, where the eighth sub-assistance information is used to characterize that the terminal expects to update a model of the AI and/or ML;
ninth sub-assistance information, where the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, where the tenth sub-assistance information is used to characterize that the terminal expects to fall back a model of the AI and/or ML.

In an embodiment, in case that the first assistance information includes the sixth sub-assistance information, the first assistance information includes:
second indication information, where the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

In an embodiment, in case that the first assistance information includes the eighth sub-assistance information, the first assistance information includes:
third indication information, where the third indication information is used to indicate a reason why the terminal expects to update the model of the AI and/or ML.

In an embodiment, in case that the first assistance information includes the ninth sub-assistance information, the first assistance information includes:
fourth indication information, where the fourth indication information is used to indicate a reason why the terminal expects to use the AI and/or ML-based way, or the fourth indication information is used to indicate a reason why the terminal expects to use the non-AI and/or ML-based way.

In an embodiment, in case that the first assistance information includes the tenth sub-assistance information, the first assistance information includes:
fifth indication information, where the fifth indication information is used to indicate a reason why the terminal expects to fall back the model of the AI and/or ML.

In an embodiment, the seventh sub-assistance information includes one or more of:
model identification information of the AI and/or ML expected or preferred by the terminal; or
model priority information of the AI and/or ML expected or preferred by the terminal.

In an embodiment, the model identification information includes one or more of:
a model identifier;
a functionality identifier;
a configuration identifier;
a model parameter;
model input information; or
model output information.

In an embodiment, the first assistance information includes:
sixth indication information, where the sixth indication information is used to indicate one or more use cases or sub use cases corresponding to the first assistance information.

An embodiment of the present application further provides a method for reporting assistance information, performed by a network side device, including:
receiving first assistance information transmitted from a terminal, where the first assistance information includes at least part of information required for implementing a model management procedure for an artificial intelligence (AI) and/or machine learning (ML).

In an embodiment, before receiving the first assistance information transmitted from the terminal, the method further includes:
transmitting first configuration information to the terminal, where the first configuration information is configuration information required by the terminal to report the first assistance information to the network side device.

In an embodiment, the first configuration information includes one or more of:
first indication information, where the first indication information is used to indicate that the network side device supports reporting of the first assistance information; or
first timer information, where a first timer is used to control the terminal to report the first assistance information.

In an embodiment, the first assistance information includes one or more of:
first sub-assistance information, where the first sub-assistance information is used to characterize that the terminal expects to report data collected by the terminal;
second sub-assistance information, where the second sub-assistance information is used to characterize that the terminal expects the network side device to transmit data collected by the network side device;
third sub-assistance information, where the third sub-assistance information is used to characterize that the terminal expects to implement, at the terminal, a model training procedure, or the third sub-assistance information is used to characterize that the terminal expects to implement, at the network side device, a model training procedure;
fourth sub-assistance information, where the fourth sub-assistance information is used to characterize that the terminal expects to implement, at the terminal, a model monitoring procedure, or the fourth sub-assistance information is used to characterize that the terminal expects to implement, at the network side device, a model monitoring procedure;
fifth sub-assistance information, where the fifth sub-assistance information is used to characterize that the terminal expects to implement, at the terminal, a model update procedure, or the fifth sub-assistance information is used to characterize that the terminal expects to implement, at the network side device, a model update procedure;
sixth sub-assistance information, where the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, where the seventh sub-assistance information is used to characterize model information of the AI and/or ML expected or preferred by the terminal;
eighth sub-assistance information, where the eighth sub-assistance information is used to characterize that the terminal expects to update a model of the AI and/or ML;
ninth sub-assistance information, where the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, where the tenth sub-assistance information is used to characterize that the terminal expects to fall back a model of the AI and/or ML.

In an embodiment, in case that the first assistance information includes the sixth sub-assistance information, the first assistance information includes:
second indication information, where the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

In an embodiment, in case that the first assistance information includes the eighth sub-assistance information, the first assistance information includes:
third indication information, where the third indication information is used to indicate a reason why the terminal expects to update the model of the AI and/or ML.

In an embodiment, in case that the first assistance information includes the ninth sub-assistance information, the first assistance information includes:
fourth indication information, where the fourth indication information is used to indicate a reason why the terminal expects to use the AI and/or ML-based way, or the fourth indication information is used to indicate a reason why the terminal expects to use the non-AI and/or ML-based way.

In an embodiment, in case that the first assistance information includes the tenth sub-assistance information, the first assistance information includes:
fifth indication information, where the fifth indication information is used to indicate a reason why the terminal expects to fall back the model of the AI and/or ML.

In an embodiment, the seventh sub-assistance information includes one or more of:
model identification information of the AI and/or ML expected or preferred by the terminal; or
model priority information of the AI and/or ML expected or preferred by the terminal.

In an embodiment, the model identification information includes one or more of:
a model identifier;
a functionality identifier;
a configuration identifier;
a model parameter;
model input information; or
model output information.

In an embodiment, the first assistance information includes:
sixth indication information, where the sixth indication information is used to indicate one or more use cases or sub use cases corresponding to the first assistance information.

An embodiment of the present application further provides a terminal, including a memory, a transceiver and a processor,
where the memory is used for storing a computer program, the transceiver is used for receiving and transmitting data under control of the processor, and the processor is used for reading the computer program in the memory and performing following operations:
transmitting first assistance information to a network side device, where the first assistance information includes at least part of information required for implementing a model management procedure for an artificial intelligence (AI) and/or machine learning (ML).

In an embodiment, before transmitting the first assistance information to the network side device, the operations further include:
receiving first configuration information transmitted from the network side device, where the first configuration information is configuration information required by the terminal to report the first assistance information to the network side device.

In an embodiment, the first configuration information includes one or more of:
first indication information, where the first indication information is used to indicate that the network side device supports reporting of the first assistance information; or
first timer information, where a first timer is used to control the terminal to report the first assistance information.

In an embodiment, transmitting the first assistance information to the network side device includes one or more of:
starting a first timer; or
transmitting the first assistance information to the network side device.

In an embodiment, before transmitting the first assistance information to the network side device, the operations further include one or more of:
determining that the terminal expects to report data collected by the terminal;
determining that the terminal expects the network side device to transmit data collected by the network side device;
determining that the terminal expects to implement, at the terminal or the network side device, a model training procedure;
determining that the terminal expects to implement, at the terminal or the network side device, a model monitoring procedure;
determining that the terminal expects to implement, at the terminal or the network side device, a model update procedure;
determining that the terminal expects to change a model of the AI and/or ML;
determining to report AI and/or ML model information expected or preferred by the terminal;
determining that the terminal expects to update a model of the AI and/or ML;
determining that the terminal expects to use an AI and/or ML-based way or a non-AI and/or ML-based way;
determining that the terminal expects to fall back a model of the AI and/or ML;
determining that the network side device configures the terminal to report the first assistance information; or
determining that the first timer is not running.

In an embodiment, the first assistance information includes one or more of:
first sub-assistance information, where the first sub-assistance information is used to characterize that the terminal expects to report data collected by the terminal;
second sub-assistance information, where the second sub-assistance information is used to characterize that the terminal expects the network side device to transmit data collected by the network side device;
third sub-assistance information, where the third sub-assistance information is used to characterize that the terminal expects to implement, at the terminal, a model training procedure, or the third sub-assistance information is used to characterize that the terminal expects to implement, at the network side device, a model training procedure;
fourth sub-assistance information, where the fourth sub-assistance information is used to characterize that the terminal expects to implement, at the terminal, a model monitoring procedure, or the fourth sub-assistance information is used to characterize that the terminal expects to implement, at the network side device, a model monitoring procedure;
fifth sub-assistance information, where the fifth sub-assistance information is used to characterize that the terminal expects to implement, at the terminal, a model update procedure, or the fifth sub-assistance information is used to characterize that the terminal expects to implement, at the network side device, a model update procedure;
sixth sub-assistance information, where the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, where the seventh sub-assistance information is used to characterize model information of the AI and/or ML expected or preferred by the terminal;
eighth sub-assistance information, where the eighth sub-assistance information is used to characterize that the terminal expects to update a model of the AI and/or ML;
ninth sub-assistance information, where the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, where the tenth sub-assistance information is used to characterize that the terminal expects to fall back a model of the AI and/or ML.

In an embodiment, in case that the first assistance information includes the sixth sub-assistance information, the first assistance information includes:
second indication information, where the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

In an embodiment, in case that the first assistance information includes the eighth sub-assistance information, the first assistance information includes:
third indication information, where the third indication information is used to indicate a reason why the terminal expects to update the model of the AI and/or ML.

In an embodiment, in case that the first assistance information includes the ninth sub-assistance information, the first assistance information includes:
fourth indication information, where the fourth indication information is used to indicate a reason why the terminal expects to use the AI and/or ML-based way, or the fourth indication information is used to indicate a reason why the terminal expects to use the non-AI and/or ML-based way.

In an embodiment, in case that the first assistance information includes the tenth sub-assistance information, the first assistance information includes:
fifth indication information, where the fifth indication information is used to indicate a reason why the terminal expects to fall back the model of the AI and/or ML.

In an embodiment, the seventh sub-assistance information includes one or more of:
model identification information of the AI and/or ML expected or preferred by the terminal; or
model priority information of the AI and/or ML expected or preferred by the terminal.

In an embodiment, the model identification information includes one or more of:
a model identifier;
a functionality identifier;
a configuration identifier;
a model parameter;
model input information; or
model output information.

In an embodiment, the first assistance information includes:
sixth indication information, where the sixth indication information is used to indicate one or more use cases or sub use cases corresponding to the first assistance information.

An embodiment of the present application further provides a network side device, including a memory, a transceiver and a processor,
where the memory is used for storing a computer program, the transceiver is used for receiving and transmitting data under control of the processor, and the processor is used for reading the computer program in the memory and performing following operations:
receiving first assistance information transmitted from a terminal, where the first assistance information includes at least part of information required for implementing a model management procedure for an artificial intelligence (AI) and/or machine learning (ML).

In an embodiment, before receiving the first assistance information transmitted from the terminal, the operations further include:
transmitting first configuration information to the terminal, where the first configuration information is configuration information required by the terminal to report the first assistance information to the network side device.

In an embodiment, the first configuration information includes one or more of:
first indication information, where the first indication information is used to indicate that the network side device supports reporting of the first assistance information; or
first timer information, where a first timer is used to control the terminal to report the first assistance information.

In an embodiment, the first assistance information includes one or more of:
first sub-assistance information, where the first sub-assistance information is used to characterize that the terminal expects to report data collected by the terminal;
second sub-assistance information, where the second sub-assistance information is used to characterize that the terminal expects the network side device to transmit data collected by the network side device;
third sub-assistance information, where the third sub-assistance information is used to characterize that the terminal expects to implement, at the terminal, a model training procedure, or the third sub-assistance information is used to characterize that the terminal expects to implement, at the network side device, a model training procedure;
fourth sub-assistance information, where the fourth sub-assistance information is used to characterize that the terminal expects to implement, at the terminal, a model monitoring procedure, or the fourth sub-assistance information is used to characterize that the terminal expects to implement, at the network side device, a model monitoring procedure;
fifth sub-assistance information, where the fifth sub-assistance information is used to characterize that the terminal expects to implement, at the terminal, a model update procedure, or the fifth sub-assistance information is used to characterize that the terminal expects to implement, at the network side device, a model update procedure;
sixth sub-assistance information, where the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, where the seventh sub-assistance information is used to characterize model information of the AI and/or ML expected or preferred by the terminal;
eighth sub-assistance information, where the eighth sub-assistance information is used to characterize that the terminal expects to update a model of the AI and/or ML;
ninth sub-assistance information, where the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, where the tenth sub-assistance information is used to characterize that the terminal expects to fall back a model of the AI and/or ML.

In an embodiment, in case that the first assistance information includes the sixth sub-assistance information, the first assistance information includes:
second indication information, where the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

In an embodiment, in case that the first assistance information includes the eighth sub-assistance information, the first assistance information includes:
third indication information, where the third indication information is used to indicate a reason why the terminal expects to update the model of the AI and/or ML.

In an embodiment, in case that the first assistance information includes the ninth sub-assistance information, the first assistance information includes:
fourth indication information, where the fourth indication information is used to indicate a reason why the terminal expects to use the AI and/or ML-based way, or the fourth indication information is used to indicate a reason why the terminal expects to use the non-AI and/or ML-based way.

In an embodiment, in case that the first assistance information includes the tenth sub-assistance information, the first assistance information includes:
fifth indication information, where the fifth indication information is used to indicate a reason why the terminal expects to fall back the model of the AI and/or ML.

In an embodiment, the seventh sub-assistance information includes one or more of:
model identification information of the AI and/or ML expected or preferred by the terminal; or
model priority information of the AI and/or ML expected or preferred by the terminal.

In an embodiment, the model identification information includes one or more of:
a model identifier;
a functionality identifier;
a configuration identifier;
a model parameter;
model input information; or
model output information.

In an embodiment, the first assistance information includes:
sixth indication information, where the sixth indication information is used to indicate one or more use cases or sub use cases corresponding to the first assistance information.

An embodiment of the present application further provides an apparatus for reporting assistance information, including:
a transmitting module, used for transmitting first assistance information to a network side device, where the first assistance information includes at least part of information required for implementing a model management procedure for an artificial intelligence (AI) and/or machine learning (ML).

In an embodiment, the apparatus further includes:
a configuration information receiving module, used for, before transmitting the first assistance information to the network side device, receiving first configuration information transmitted from the network side device, where the first configuration information is configuration information required by a terminal to report the first assistance information to the network side device.

In an embodiment, the first configuration information includes one or more of:
first indication information, where the first indication information is used to indicate that the network side device supports reporting of the first assistance information; or
first timer information, where a first timer is used to control the terminal to report the first assistance information.

In an embodiment, the transmitting module is used for one or more of:
starting a first timer; or
transmitting the first assistance information to the network side device.

In an embodiment, the apparatus further includes:
a performing module, used for, before transmitting the first assistance information to the network side device, performing one or more of:
   determining that a terminal expects to report data collected by the terminal;
   determining that a terminal expects the network side device to transmit data collected by the network side device;
   determining that a terminal expects to implement, at the terminal or the network side device, a model training procedure;
   determining that a terminal expects to implement, at the terminal or the network side device, a model monitoring procedure;
   determining that a terminal expects to implement, at the terminal or the network side device, a model update procedure;
   determining that a terminal expects to change a model of the AI and/or ML;
   determining to report AI and/or ML model information expected or preferred by a terminal;
   determining that a terminal expects to update a model of the AI and/or ML;
   determining that a terminal expects to use an AI and/or ML-based way or a non-AI and/or ML-based way;
   determining that a terminal expects to fall back a model of the AI and/or ML;
   determining that the network side device configures a terminal to report the first assistance information; or
   determining that the first timer is not running.

In an embodiment, the first assistance information includes one or more of:
first sub-assistance information, where the first sub-assistance information is used to characterize that a terminal expects to report data collected by the terminal;
second sub-assistance information, where the second sub-assistance information is used to characterize that a terminal expects the network side device to transmit data collected by the network side device;
third sub-assistance information, where the third sub-assistance information is used to characterize that a terminal expects to implement, at the terminal, a model training procedure, or the third sub-assistance information is used to characterize that a terminal expects to implement, at the network side device, a model training procedure;
fourth sub-assistance information, where the fourth sub-assistance information is used to characterize that a terminal expects to implement, at the terminal, a model monitoring procedure, or the fourth sub-assistance information is used to characterize that a terminal expects to implement, at the network side device, a model monitoring procedure;
fifth sub-assistance information, where the fifth sub-assistance information is used to characterize that a terminal expects to implement, at the terminal, a model update procedure, or the fifth sub-assistance information is used to characterize that a terminal expects to implement, at the network side device, a model update procedure;
sixth sub-assistance information, where the sixth sub-assistance information is used to characterize that a terminal expects to change a model of the AI and/or ML, or the sixth sub-assistance information is used to characterize that a terminal expects to activate a model of the AI and/or ML, or the sixth sub-assistance information is used to characterize that a terminal expects to deactivate a model of the AI and/or ML;
seventh sub-assistance information, where the seventh sub-assistance information is used to characterize model information of the AI and/or ML expected or preferred by a terminal;
eighth sub-assistance information, where the eighth sub-assistance information is used to characterize that a terminal expects to update a model of the AI and/or ML;
ninth sub-assistance information, where the ninth sub-assistance information is used to characterize that a terminal expects to use an AI and/or ML-based way, or the ninth sub-assistance information is used to characterize that a terminal expects to use a non-AI and/or ML-based way; or
tenth sub-assistance information, where the tenth sub-assistance information is used to characterize that a terminal expects to fall back a model of the AI and/or ML.

In an embodiment, in case that the first assistance information includes the sixth sub-assistance information, the first assistance information includes:
second indication information, where the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

In an embodiment, in case that the first assistance information includes the eighth sub-assistance information, the first assistance information includes:
third indication information, where the third indication information is used to indicate a reason why the terminal expects to update the model of the AI and/or ML.

In an embodiment, in case that the first assistance information includes the ninth sub-assistance information, the first assistance information includes:
fourth indication information, where the fourth indication information is used to indicate a reason why the terminal expects to use the AI and/or ML-based way, or the fourth indication information is used to indicate a reason why the terminal expects to use the non-AI and/or ML-based way.

In an embodiment, in case that the first assistance information includes the tenth sub-assistance information, the first assistance information includes:
fifth indication information, where the fifth indication information is used to indicate a reason why the terminal expects to fall back the model of the AI and/or ML.

In an embodiment, the seventh sub-assistance information includes one or more of:
model identification information of the AI and/or ML expected or preferred by the terminal; or
model priority information of the AI and/or ML expected or preferred by the terminal.

In an embodiment, the model identification information includes one or more of:
a model identifier;
a functionality identifier;
a configuration identifier;
a model parameter;
model input information; or
model output information.

In an embodiment, the first assistance information includes:
sixth indication information, where the sixth indication information is used to indicate one or more use cases or sub use cases corresponding to the first assistance information.

An embodiment of the present application further provides an apparatus for reporting assistance information, including:
a receiving module, used for receiving first assistance information transmitted from a terminal, where the first assistance information includes at least part of information required for implementing a model management procedure for an artificial intelligence (AI) and/or machine learning (ML).

In an embodiment, the apparatus further includes:
a configuration information transmitting module, used for, before receiving the first assistance information transmitted from the terminal, transmitting first configuration information to the terminal, where the first configuration information is configuration information required by the terminal to report the first assistance information to a network side device.

In an embodiment, the first configuration information includes one or more of:
first indication information, where the first indication information is used to indicate that the network side device supports reporting of the first assistance information; or
first timer information, where a first timer is used to control the terminal to report the first assistance information.

In an embodiment, the first assistance information includes one or more of:
first sub-assistance information, where the first sub-assistance information is used to characterize that the terminal expects to report data collected by the terminal;
second sub-assistance information, where the second sub-assistance information is used to characterize that the terminal expects a network side device to transmit data collected by the network side device;
third sub-assistance information, where the third sub-assistance information is used to characterize that the terminal expects to implement, at the terminal, a model training procedure, or the third sub-assistance information is used to characterize that the terminal expects to implement a model training procedure at a network side device;
fourth sub-assistance information, where the fourth sub-assistance information is used to characterize that the terminal expects to implement, at the terminal, a model monitoring procedure, or the fourth sub-assistance information is used to characterize that the terminal expects to implement a model monitoring procedure at a network side device;
fifth sub-assistance information, where the fifth sub-assistance information is used to characterize that the terminal expects to implement, at the terminal, a model update procedure, or the fifth sub-assistance information is used to characterize that the terminal expects to implement a model update procedure at a network side device;
sixth sub-assistance information, where the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, where the seventh sub-assistance information is used to characterize model information of the AI and/or ML expected or preferred by the terminal;
eighth sub-assistance information, where the eighth sub-assistance information is used to characterize that the terminal expects to update a model of the AI and/or ML;
ninth sub-assistance information, where the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, where the tenth sub-assistance information is used to characterize that the terminal expects to fall back a model of the AI and/or ML.

In an embodiment, in case that the first assistance information includes the sixth sub-assistance information, the first assistance information includes:
second indication information, where the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

In an embodiment, in case that the first assistance information includes the eighth sub-assistance information, the first assistance information includes:
third indication information, where the third indication information is used to indicate a reason why the terminal expects to update the model of the AI and/or ML.

In an embodiment, in case that the first assistance information includes the ninth sub-assistance information, the first assistance information includes:
fourth indication information, where the fourth indication information is used to indicate a reason why the terminal expects to use the AI and/or ML-based way, or the fourth indication information is used to indicate a reason why the terminal expects to use the non-AI and/or ML-based way.

In an embodiment, in case that the first assistance information includes the tenth sub-assistance information, the first assistance information includes:
fifth indication information, where the fifth indication information is used to indicate a reason why the terminal expects to fall back the model of the AI and/or ML.

In an embodiment, the seventh sub-assistance information includes one or more of:
model identification information of the AI and/or ML expected or preferred by the terminal; or
model priority information of the AI and/or ML expected or preferred by the terminal.

In an embodiment, the model identification information includes one or more of:
a model identifier;
a functionality identifier;
a configuration identifier;
a model parameter;
model input information; or
model output information.

In an embodiment, the first assistance information includes:
sixth indication information, where the sixth indication information is used to indicate one or more use cases or sub use cases corresponding to the first assistance information.

In the methods and apparatuses for reporting assistance information provided by the embodiments of the present application, the terminal transmits the first assistance information to the network side device, and the first assistance information helps the model management procedure for the AI and/or ML to be implemented in the radio communication system, which improves practicality of the AI and/or ML in the radio communication system.

### BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.
FIG. 1 is a first schematic flowchart of a method for reporting assistance information according to an embodiment of the present application;
FIG. 2 is a second schematic flowchart of a method for reporting assistance information according to an embodiment of the present application;
FIG. 3 is a schematic structural diagram of a network side device according to an embodiment of the present application;
FIG. 4 is a schematic structural diagram of a terminal according to an embodiment of the present application;
FIG. 5 is a first schematic structural diagram of an apparatus for reporting assistance information according to an embodiment of the present application; and
FIG. 6 is a second schematic structural diagram of an apparatus for reporting assistance information according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

The embodiments of the present application provide methods and apparatuses for reporting assistance information, to improve practicality of an artificial intelligence (AI) and/or machine learning (ML) in a radio communication system.

The methods and apparatuses provided by the embodiments of the present application are based on the same conception, and the implementation of the apparatuses and methods may be referred to each other since the principles of the methods and apparatuses are similar, and are not repeated here.

The solutions according to the embodiments of the present application may be applicable to various systems, especially a 5^{th} generation (5G) system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

For different functional requirements, a terminal may report some pieces of assistance information to a network side. For example, in a power saving mechanism, assistance information of a user equipment (UE) such as overheating is reported to the network. For a deactivated secondary cell group (SCG), assistance information such as whether a UE wants the SCG to be deactivated is reported to the network. The UE provides a situation of the UE to the network side through the assistance information, to assist the network side in making better decisions.

For a model management procedure for an AI and/or ML, the embodiments of the present application provide methods and apparatuses for reporting assistance information.

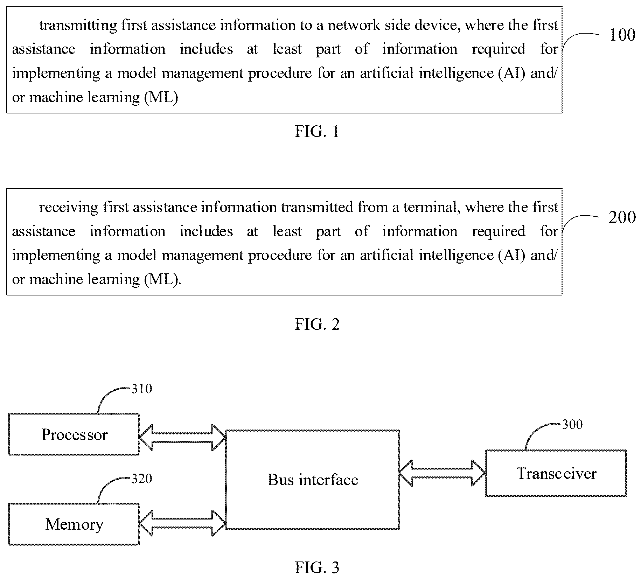

FIG. 1 is a first schematic flowchart of a method for reporting assistance information according to an embodiment of the present application. As shown in FIG. 1, the method for reporting assistance information is performed by a terminal, that is, an execution subject is the terminal, and the method includes:
step 100: transmitting first assistance information to a network side device, where the first assistance information includes at least part of information required for implementing a model management procedure for an artificial intelligence (AI) and/or machine learning (ML).

In an embodiment, the model management procedure for the AI and/or ML may include a procedure of adjusting a model state for the AI and/or ML.

In an embodiment, the model management procedure for the AI and/or ML may include a procedure of optimizing a model for the AI and/or ML.

In an embodiment, the model management procedure for the AI and/or ML may include a procedure of applying a model for the AI and/or ML.

In an embodiment, the model management procedure for the AI and/or ML may include any procedure involving a model for the AI and/or ML, which is not limited in the embodiments of the present application.

In an embodiment, the model management procedure for the AI and/or ML includes one or more of the following life-cycle management (LCM) procedures:
data collection;
model training;
model registration;
model deployment;
model configuration;
model inference;
model selection;
model activation;
model deactivation;
model switching;
model fallback;
model monitoring;
model update;
model transfer; or
UE capability management.

In an embodiment, the terminal may transmit the first assistance information to the network side device, where the first assistance information includes at least part of information required to implement various procedures of an AI/ML LCM. That is, the terminal may transmit the first assistance information to the network side device, and the first assistance information may assist in implementing one or more of:
data collection;
model training;
model registration;
model deployment;
model configuration;
model inference;
model selection;
model activation;
model deactivation;
model switching;
model fallback;
model monitoring;
model update;
model transfer; or
UE capability management.

In an embodiment, since an architecture of the AI and/or ML is different from that an architecture of a radio communication, the former is driven by data and the latter is driven by events or time. In order to implement relevant functions of the AI and/or ML in a radio communication system, the terminal may transmit the first assistance information to the network side, where the first assistance information may include data for driving or triggering the relevant functions of the AI and/or ML, or information or instructions for driving or triggering execution of the relevant functions of the AI and/or ML.

In an embodiment, transmitting of the first assistance information may be reported through a *UEAssistanceInformation* message.

In an embodiment, a radio resource control (RRC) signaling may be introduced to carry the first assistance information dedicatedly.

In an embodiment, after receiving the first assistance information, the network side device may make a decision based on the first assistance information to obtain decision result information, where the decision result information is used to characterize whether an expectation of the terminal is met; and transmit the decision result information to the terminal.

In an embodiment, after receiving the first assistance information, the network side device may decide, in combination with some other situations or information, whether to perform a relevant procedure corresponding to the first assistance information, and transmit the decision result information to the terminal based on a decision result.

In an embodiment, the procedure of the network side device making a decision based on the first assistance information depends on a network implementation, which is not limited in the embodiments of the present application.

In the method for reporting assistance information provided in the embodiments of the present application, the terminal transmits the first assistance information to the network side device, and the first assistance information helps the model management procedure for the AI and/or ML to be implemented in the radio communication system, which improves the practicality of the AI and/or ML in the radio communication system.

In an embodiment, before transmitting the first assistance information to the network side device, the method further includes:
receiving first configuration information transmitted from the network side device, where the first configuration information is configuration information required by the terminal to report the first assistance information to the network side device.

In an embodiment, the network side device may first transmit the first configuration information to the terminal, where the first configuration information is used to configure reporting of the first assistance information, and the terminal may transmit the first assistance information to the network side device based on the first configuration information after receiving the first configuration information.

In an embodiment, the terminal does not necessarily have to report assistance information based on a network configuration, and it may be based on the network configuration or not based on the network configuration.

In an embodiment, the terminal may transmit, based on the first configuration information, the first assistance information to the network side device in case that the first configuration information is received.

In an embodiment, the terminal may also transmit, based on the first configuration information, the first assistance information to the network side device in case that the first configuration information is not received.

In an embodiment, the first configuration information includes one or more of:
first indication information, where the first indication information is used to indicate that the network side device supports reporting of the first assistance information; or
first timer information, where a first timer is used to control the terminal to report the first assistance information.

In an embodiment, the network side device may configure the first indication information and/or the first timer information (*ProhibitTimer* value) for the terminal.

In an embodiment, the first indication information may explicitly or implicitly indicate that the terminal may/needs to report assistance information that a UE expects to report data collected by the terminal. The first timer information (*ProhibitTimer* value) may control the terminal to report the assistance information that the terminal expects to report the data collected by the terminal, at most a given number of times before the timer expires. For example, the terminal is controlled to report the assistance information that the terminal expects to report the data collected by the terminal, at most once before the timer expires.

In an embodiment, the first indication information may explicitly or implicitly indicate that the terminal may/needs to report assistance information that the terminal expects the network side device to transmit data collected by the network side to the terminal, used for the terminal to perform model training/model update, etc. The first timer information (*ProhibitTimer* value) controls the terminal to report the assistance information that the terminal expects the network side device to transmit the data collected by the network side to the terminal, used for the terminal to perform model training/model update, etc., at most for a given number of times before the timer expires. For example, the terminal is controlled to report the assistance information that the terminal expects the network side device to transmit the data collected by the network side to the terminal, used for the terminal to perform model training/model update, etc., at most once before the timer expires.

In an embodiment, the first indication information may explicitly or implicitly indicate that the terminal may/needs to report assistance information that the terminal expects model training at a terminal side/network side. The first timer information *(ProhibitTimer* value) may control the terminal to report the assistance information that the terminal expects model training at the terminal side/network side, at most for a given number of times before the timer expires. For example, the terminal is controlled to report the assistance information that the terminal expects model training at the terminal side/network side, at most once before the timer expires.

In an embodiment, the first indication information may explicitly or implicitly indicate that the terminal may/needs to report assistance information that the terminal expects model monitoring at a terminal side/network side, a model. The first timer information (*ProhibitTimer* value) may control the terminal to report the assistance information that the terminal expects model monitoring at the terminal side/network side, at most for a given number of times before the timer expires. For example, the terminal is controlled to report the assistance information that the terminal expects model monitoring at the terminal side/network side, at most once before the timer expires.

In an embodiment, the first indication information may explicitly or implicitly indicate that the terminal may/needs to report assistance information that the terminal expects model monitoring at a terminal side/network side, a model. The first timer information (*ProhibitTimer* value) may control the terminal to report the assistance information that the terminal expects to monitor, at the terminal side/network side, the model, at most for a given number of times before the timer expires. For example, the terminal is controlled to report the assistance information that the terminal expects to monitor, at the terminal side/network side, the model, at most once before the timer expires.

In an embodiment, the first indication information may explicitly or implicitly indicate that the terminal may/needs to report assistance information that the terminal expects model update at a terminal side/network side. The first timer information (*ProhibitTimer* value) may control the terminal to report the assistance information that the terminal expects model update at the terminal side/network side, at most for a given number of times before the timer expires. For example, the terminal is controlled to report the assistance information that the terminal expects model update at the terminal side/network side, at most once before the timer expires.

In an embodiment, the first indication information may explicitly or implicitly indicate that the terminal may/needs to report assistance information that the terminal expects model change/switching/activation/deactivation. The first timer information (*ProhibitTimer* value) may control the terminal to report the assistance information that the terminal expects model change/switching/activation/deactivation, at most for a given number of times before the timer expires. For example, the terminal is controlled to report the assistance information that the terminal expects model change/switching/activation/deactivation, at most once before the timer expires.

In an embodiment, the first indication information may explicitly or implicitly indicate that the terminal may/needs to report assistance information of a model recommendation/preference. The first timer information (*ProhibitTimer* value) may control the terminal to report the assistance information of the model recommendation/preference at most for a given number of times before the timer expires. For example, the terminal is controlled to report the assistance information of the model recommendation/preference at most once before the timer expires.

In an embodiment, the first indication information may explicitly or implicitly indicate that the terminal may/needs to report assistance information that the terminal expects model update. The first timer information (*ProhibitTimer* value) may control the terminal to report the assistance information that the terminal expects model update, at most for a given number of times before the timer expires. For example, the terminal is controlled to report the assistance information that the terminal expects model update, at most once before the timer expires.

In an embodiment, the first indication information may explicitly or implicitly indicate that the terminal may/needs to report assistance information that the terminal expects to use an AI and/or ML-based way or a non-AI and/or ML-based way. The first timer information (*ProhibitTimer* value) may control the terminal to report the assistance information that the terminal expects to use the AI and/or ML-based way or the non-AI and/or ML-based way, at most for a given number of times before the timer expires. For example, the terminal is controlled to report the assistance information that the terminal expects to use the AI and/or ML-based way or the non-AI and/or ML-based way, at most once before the timer expires.

In an embodiment, the first indication information may explicitly or implicitly indicate that the terminal may/needs to report assistance information that the terminal expects to fall back an AI/ML model. The first timer information (*ProhibitTimer* value) may control the terminal to report the assistance information that the terminal expects to fall back the AI/ML model, at most for a given number of times before the timer expires. For example, the terminal is controlled to report the assistance information that the terminal expects to fall back the AI/ML model, at most once before the timer expires.

In an embodiment, the network side device may configure one or more of the following information for the UE:
a piece of indication information (explicit indication or implicit indication) and/or a *ProhibitTimer* value, where the indication information is used to indicate that the UE may/needs to report assistance information that the UE expects to report data of a UE data collection;
a piece of indication information (explicit indication or implicit indication) and/or a *ProhibitTimer* value, where the indication information is used to indicate that the UE may/needs to report assistance information that the UE expects the network side to transmit data after a data collection to the UE, used for the UE to perform model training/model update, etc.
a piece of indication information (explicit indication or implicit indication) and/or a *ProhibitTimer* value, where the indication information is used to indicate that the UE may/needs to report assistance information that the UE expects model training at a UE side/network side;
a piece of indication information (explicit indication or implicit indication) and/or a *ProhibitTimer* value, where the indication information is used to indicate that the UE may/needs to report assistance information that the UE expects model monitoring at a UE side/network side;
a piece of indication information (explicit indication or implicit indication) and/or a *ProhibitTimer* value, where the indication information is used to indicate that the UE may/needs to report assistance information that the UE expects model update at a UE side/network side;
a piece of indication information (explicit indication or implicit indication) and/or a *ProhibitTimer* value, where the indication information is used to indicate that the UE may/needs to report assistance information that the UE expects model change/switching/activation/deactivation;
a piece of indication information (explicit indication or implicit indication) and/or a *ProhibitTimer* value, where the indication information is used to indicate that the UE may/needs to report assistance information of a model recommendation/preference;
a piece of indication information (explicit indication or implicit indication) and/or a *ProhibitTimer* value, where the indication information is used to indicate that the UE may/needs to report assistance information that the UE expects model update;
a piece of indication information (explicit indication or implicit indication) and/or a *ProhibitTimer* value, where the indication information is used to indicate that the UE may/needs to report assistance information that the UE expects to use an AI and/or ML-based way or a non-AI and/or ML-based way; or
a piece of indication information (explicit indication or implicit indication) and/or a *ProhibitTimer* value, where the indication information is used to indicate that the UE may/needs to report assistance information that the UE expects to fall back an AI/ML model.

In an embodiment, the network side device may configure a *ProhibitTimer* for the terminal to prevent the UE from frequently reporting the first assistance information.

In an embodiment, transmitting the first assistance information to the network side device includes one or more of:
starting a first timer; or
transmitting the first assistance information to the network side device.

In an embodiment, the terminal may perform at least one of:
starting *ProhibitTimer* corresponding to a certain piece of first assistance information, and no longer transmitting the first assistance information before *ProhibitTimer* expires; or
transmitting the first assistance information.

In an embodiment, before transmitting the first assistance information to the network side device, the method further includes one or more of:
determining that the terminal expects to report data collected by the terminal;
determining that the terminal expects the network side device to transmit data collected by the network side device;
determining that the terminal expects to implement, at the terminal or the network side device, a model training procedure;
determining that the terminal expects to implement, at the terminal or the network side device, a model monitoring procedure;
determining that the terminal expects to implement, at the terminal or the network side device, a model update procedure;
determining that the terminal expects to change a model of the AI and/or ML;
determining to report model information of the AI and/or ML expected or preferred by the terminal;
determining that the terminal expects to update a model of the AI and/or ML;
determining that the terminal expects to use an AI and/or ML-based way or a non-AI and/or ML-based way;
determining that the terminal expects to fall back a model of the AI and/or ML;
determining that the network side device configures the terminal to report the first assistance information; or
determining that the first timer is not running.

In an embodiment, in case of determining that the terminal expects to report the data collected by the terminal, for example, in case that the UE has data of a data collection and wants to report the data to the network, the terminal may perform at least one of:
starting *ProhibitTimer,* and before *ProhibitTimer* expires, no longer reporting the assistance information that the UE expects to report the data collected by the terminal; or
transmitting the assistance information that the UE expects to report the data collected by the terminal.

In an embodiment, in case of determining that the terminal expects the network side device to transmit the data collected by the network side to the terminal for the terminal to perform model training/model update, for example, in case that the UE needs a data set for model training/model update, etc., the terminal may perform at least one of:
starting *ProhibitTimer,* and before *ProhibitTimer* expires, no longer reporting the assistance information that the terminal expects the network side device to transmit the data collected by the network side to the terminal for the terminal to perform model training/model update, etc.; or
transmitting the assistance information that the terminal expects the network side device to transmit the data collected by the network side to the terminal for the terminal to perform model training/model update, etc.

In an embodiment, in case of determining that the terminal expects model training at the terminal side/network side, the terminal may perform at least one of:
starting *ProhibitTimer,* and before *ProhibitTimer* expires, no longer reporting the assistance information that the terminal expects model training at the terminal side/network side; or
transmitting the assistance information that the terminal expects model training at the terminal side/network side.

In an embodiment, in case of determining that the terminal expects model monitoring at the terminal side/network side, the terminal may perform at least one of:
starting *ProhibitTimer,* and before *ProhibitTimer* expires, no longer reporting the assistance information that the terminal expects model monitoring at the terminal side/network side; or
transmitting the assistance information that the terminal expects model monitoring at the terminal side/network side.

In an embodiment, in case of determining that the terminal expects model update at the terminal side/network side, the terminal may perform at least one of:
starting *ProhibitTimer,* and before *ProhibitTimer* expires, no longer reporting the assistance information that the terminal expects model update at the terminal side/network side; or
transmitting the assistance information that the terminal expects model update at the terminal side/network side.

In an embodiment, in case of determining that the terminal expects model change/switching/activation/deactivation, for example, in case that the UE considers some factors and expects model change/switching/activation/deactivation, the terminal may perform at least one of:
starting *ProhibitTimer,* and before *ProhibitTimer* expires, no longer reporting the assistance information that the terminal expects model change/switching/activation/deactivation;
transmitting the assistance information that the terminal expects model change/switching/activation/deactivation; or
reporting a cause value, for example, the cause value may indicate that model performance is poor or the model is not applicable.

In an embodiment, in case of determining that the terminal expects to report a model recommendation/preference, the terminal may perform at least one of:
starting *ProhibitTimer,* and before *ProhibitTimer* expires, no longer reporting the assistance information of the model recommendation/preference; or
transmitting the assistance information of the model recommendation/preference.

In an embodiment, in case of determining that the terminal expects model update, the terminal may perform at least one of:
starting *ProhibitTimer,* and before *ProhibitTimer* expires, no longer reporting the assistance information that the terminal expects model update;
transmitting the assistance information that the terminal expects model update; or
reporting a cause value, for example, the cause value may indicate that model performance is poor, a model generalization ability is poor, or the model is not applicable, etc.

In an embodiment, in case of determining that the terminal expects to use an AI and/or ML-based way or a non-AI and/or ML-based way, the terminal may perform at least one of:
starting *ProhibitTimer,* and before *ProhibitTimer* expires, no longer reporting the assistance information that the terminal expect to use the AI and/or ML-based way or the non-AI and/or ML-based way;
transmitting the assistance information that the terminal expect to use the AI and/or ML-based way or the non-AI and/or ML-based way; or
reporting a cause value, for example, the cause value may indicate that an AI/ML model has poor performance, an AI/ML model has good performance, overhead is too large, or overheating, etc.

In an embodiment, in case of determining that the terminal expects to fall back an AI/ML model, the terminal may perform at least one of:
starting *ProhibitTimer,* and before *ProhibitTimer* expires, no longer reporting the assistance information that the terminal expect to fall back the AI/ML model;
transmitting the assistance information that the terminal expect to expect to fall back the AI/ML model; or
reporting a cause value, for example, the cause value may indicate a UE has insufficient memory, or overhead is too large, etc.

In an embodiment, in case of determining that a network configures a UE to report the first assistance information, the terminal may perform at least one of:
starting *ProhibitTimer,* and before *ProhibitTimer* expires, no longer reporting the first assistance information; or
transmitting the first assistance information.

In an embodiment, in case of determining that a first timer is not running, the terminal may perform at least one of:
starting *ProhibitTimer,* and before *ProhibitTimer* expires, no longer reporting the first assistance information; or
transmitting the first assistance information.

In an embodiment, after receiving the first assistance information reported from the UE, the network side device may decide, in combination with some other situations or information, such as depending on a network implementation, whether to request the UE to report the data of the UE data collection, whether to transmit the data set of the data collection to the UE for the UE to perform model training/update, whether to indicate the UE to perform model change/switching/activation/deactivation, etc., and then decide whether to transmit corresponding signaling to the UE based on a network decision result.

In an embodiment, the first assistance information includes one or more of:
first sub-assistance information, where the first sub-assistance information is used to characterize that the terminal expects to report data collected by the terminal;
second sub-assistance information, where the second sub-assistance information is used to characterize that the terminal expects the network side device to transmit data collected by the network side device;
third sub-assistance information, where the third sub-assistance information is used to characterize that the terminal expects to implement, at the terminal, a model training procedure, or the third sub-assistance information is used to characterize that the terminal expects to implement, at the network side device, a model training procedure;
fourth sub-assistance information, where the fourth sub-assistance information is used to characterize that the terminal expects to implement, at the terminal, a model monitoring procedure, or the fourth sub-assistance information is used to characterize that the terminal expects to implement, at the network side device, a model monitoring procedure;
fifth sub-assistance information, where the fifth sub-assistance information is used to characterize that the terminal expects to implement, at the terminal, a model update procedure, or the fifth sub-assistance information is used to characterize that the terminal expects to implement, at the network side device, a model update procedure;
sixth sub-assistance information, where the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, where the seventh sub-assistance information is used to characterize model information of the AI and/or ML expected or preferred by the terminal;
eighth sub-assistance information, where the eighth sub-assistance information is used to characterize that the terminal expects to update a model of the AI and/or ML;
ninth sub-assistance information, where the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, where the tenth sub-assistance information is used to characterize that the terminal expects to fall back a model of the AI and/or ML.

In an embodiment, each piece of sub-assistance information may correspond to its own first timer information *ProhibitTimer*, which is configured separately or uniformly by the network side device, or determined based on default, or predefined by a protocol, or pre-set, or set in real time.

In an embodiment, multiple pieces of sub-assistance information may correspond to a unified first timer information *ProhibitTimer*, which is configured separately or uniformly by the network side device, or determined based on default, or predefined by a protocol, or pre-set, or set in real time.

In an embodiment, the data collected by the terminal may include data of a UE data collection.

In an embodiment, the data collected by the network side device may include data after a network side data collection.

In an embodiment, the model information of the AI and/or ML expected or preferred by the terminal may include a model recommendation/preference.

In an embodiment, a UE reports that the UE expects to report data of a UE data collection, and the UE is collecting data for an AI/ML data collection. Taking a channel state information (CSI) compression sub use case as an example, that is, the UE is performing the AI/ML data collection for the CSI compression sub use case, and an assistance information reporting procedure may include the following.

Step 1: a network side device transmits first configuration information to the UE, and the first configuration information includes one or more types of the following information.

Configuration information 1: first indication information, used to indicate that in case that the UE expects to report data collected for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects to report the collected data, the UE may report the assistance information to notify the network side device; and a piece of indication information indicating it is for which use case/sub use case, that is, the CSI compression sub use case for here; the former indication information may be explicitly configured or implicitly indicated, and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects to report the data collected for the CSI compression sub use case to the network side device, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) first sub-assistance information, indicating that the UE expects to report the data collected for the CSI compression sub use case to the network side device; or
(2) first sub-assistance information, indicating that the UE expects to report the collected data to the network side device, and sixth indication information, indicating which use case/sub use case the collected data is for, that is, the CSI compression sub use case in this case.

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide, in combination with some other situations or information depending on an implementation of the network side device, whether to request the UE to report the data collected for the CSI compression sub use case.

Step 4: in case that the network side device decides to request the UE to report the data collected for the CSI compression sub use case, the network side device transmits a signaling to the UE for requesting.

Step 5: the UE reports the data collected for the CSI compression sub use case to the network side device based on the request from the network side device.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects to report the collected data, no matter which use cases/sub use cases or which sub use case/sub use case the data is collected for, the UE may transmit overall assistance information to indicate that the UE now has the collected data and expects reporting, which is not for a specific use case/sub use case.

In an embodiment, a UE reports that the UE expects a network side device to transmit data after a data collection to the UE, and the UE needs a data set to complete model training/model update, etc. Taking a CSI compression sub use case as an example, that is, the UE needs the data set to complete model training/update for the CSI compression sub use case, an assistance information reporting procedure may include the following.

Step 1: a network side device transmits first configuration information to the UE, and the first configuration information includes one or more types of the following information.

Configuration information 1: first indication information, used to indicate that in case that the UE expects the network side device to transmit the data, after the data collection for the CSI compression sub use case to the UE, for the UE to perform model training/update, etc., for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects the network side device to transmit the data after the data collection to the UE, for the UE to perform model training/update, etc., the UE may report the assistance information to notify the network side device; and a piece of indication information indicating it is for which use case/sub use case, that is, the CSI compression sub use case in this case; the former indication information may be explicitly configured or implicitly indicated, and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects the network side device to transmit the data, after the data collection for the CSI compression sub use case to the UE, for the UE to perform model training/update, etc., for the CSI compression sub use case, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) second sub-assistance information, indicating that the UE expects the network side device to transmit the data, after the data collection for the CSI compression sub use case to the UE, for the UE to perform model training/update, etc., for the CSI compression sub use case; or
(2) second sub-assistance information, indicating that the UE expects the network side device to transmit the data after the data collection to the UE, for the UE to perform model training/update, etc., and sixth indication information, indicating which use case/sub use case the data of the data collection is for (that is, the CSI compression sub use case for here).

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide, in combination with some other situations or information depending on an implementation of the network side device, whether to transmit the data of the data collection for the CSI compression sub use case to the UE.

Step 4: in case that the network side device decides to transmit the data of the data collection for the CSI compression sub use case to the UE, the network side device transmit the data of the data collection for the CSI compression sub use case to the UE.

Step 5: the UE receives the data of the data collection for the CSI compression sub use case from the network side device, and uses the received data for subsequent model training/update for CSI compression.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects the network side device to transmit data after a data collection for a certain use case/certain use cases or a certain sub use case/certain sub use cases, for the UE to perform model training/update, etc., for a certain use case/certain use cases or a certain sub use case/certain sub use cases, the UE may transmit overall assistance information to indicate that the UE expects the network side device to transmit the data after the data collection to the UE, for the UE to perform model training/update, which is not for a specific use case/sub use case.

In an embodiment, a UE reports that the UE expects model training at a UE side/network side. Taking a CSI compression sub use case as an example, an assistance information reporting procedure may include the following.

Step 1: a network side device transmits configuration information to the UE, and the configuration information includes one or more types of the following information.

Configuration information 1: first indication information, used to indicate that in case that the UE expects model training for the CSI compression sub use case at a UE side/network side, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects model training at a UE side/network side, the UE may report the assistance information to notify the network side device; and a piece of indication information indicating it is for which use case/sub use case (that is, the CSI compression sub use case for here); the former indication information may be explicitly configured or implicitly indicated, and the latter indication information is explicitly configured.

Configuration information 2: first timer information, such as a *ProhibitTimer* value, this *ProhibitTimer* is used to prevent the UE from frequently reporting the assistance information.

In an embodiment, step 1 is an optional step, that is, it is not a step that must be executed.

Step 2: in case that the UE expects model training for the CSI compression sub use case at a UE side/network side, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) third sub-assistance information, indicating that the UE expects model training for the CSI compression sub use case at a UE side/network side, and the indication information may be an enumeration type, that is, {UE side, network side};
(2) third sub-assistance information, indicating that the UE expects model training at a UE side/network side, and the indication information may be an enumeration type, that is, {UE side, network side}; and sixth indication information, indicating it is for which use case/sub use case (that is, the CSI compression sub use case for here);
(3) third sub-assistance information, indicating that the UE expects model training for the CSI compression sub use case at a UE side/network side, this indication information is two separate pieces of indication information, one piece of indication information indicates that the UE expects model training at a UE side, and the other piece of indication information indicates that the UE expects model training at a network side; or
(4) third sub-assistance information, indicating that the UE expects model training at a UE side/network side, this indication information is two separate pieces of indication information, one piece of indication information indicates that the UE expects model training at a UE side, and the other piece of indication information indicates that the UE expects model training at a network side; and sixth indication information, indicating it is for which use case/sub use case (that is, the CSI compression sub use case for here).

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide that, in combination with some other situations or information depending on an implementation of the network side device, model training for the CSI compression sub use case is whether at the UE side or the network side.

Step 4: the network side device notifies the UE of a decision result of the network side device, i.e., the model training is whether at the UE side or the network side.

Step 4 is an optional step.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects model training at a UE side/network side for a certain use case/certain use cases or a certain sub use case/certain sub use cases, the UE may transmit overall assistance information to indicate that the UE expects model training at a UE side/network side, which is not for a specific use case/sub use case.

In an embodiment, a UE reports that the UE expects model monitoring at a UE side/network side. Taking a CSI compression sub use case as an example, an assistance information reporting procedure may include the following.

Step 1: a network side device transmits configuration information to the UE, and the configuration information includes one or more types of the following information.

Configuration information 1: first indication information, used to indicate that in case that the UE expects model monitoring at a UE side/network side for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects model monitoring at a UE side/network side, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects model monitoring at a UE side/network side for the CSI compression sub use case, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) fourth sub-assistance information, indicating that the UE expects model monitoring at a UE side/network side for the CSI compression sub use case, and the indication information may be an enumeration type, that is, {UE side, network side};
(2) fourth sub-assistance information, indicating that the UE expects model monitoring at a UE side/network side, and the indication information may be an enumeration type, that is, {UE side, network side}; and sixth indication information, indicating it is for which use case/sub use case (that is, the CSI compression sub use case for here);
(3) fourth sub-assistance information, indicating that the UE expects model monitoring at a UE side/network side for the CSI compression sub use case, this indication information is two separate pieces of indication information, one piece of indication information indicates that the UE expects model monitoring at a UE side, and the other piece of indication information indicates that the UE expects model monitoring at a network side; or
(4) fourth sub-assistance information, indicating that the UE expects model monitoring at a UE side/network side, this indication information is two separate pieces of indication information, one piece of indication information indicates that the UE expects model monitoring at a UE side, and the other piece of indication information indicates that the UE expects model monitoring at a network side; and sixth indication information, indicating it is for which use case/sub use case (that is, the CSI compression sub use case for here).

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide that, in combination with some other situations or information depending on an implementation of the network side device, model monitoring is whether at the UE side or the network side for the CSI compression sub use case.

Step 4: the network side device notifies the UE of a decision result of the network side device, i.e., the model monitoring is whether at the UE side or the network side.

Step 4 is an optional step.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects model monitoring at a UE side/network side for a certain use case/certain use cases or a certain sub use case/certain sub use cases, the UE may transmit overall assistance information to indicate that the UE expects model monitoring at a UE side/network side, which is not for a specific use case/sub use case.

In an embodiment, a UE reports that the UE expects model update at a UE side/network side. Taking a CSI compression sub use case as an example, an assistance information reporting procedure may include the following.

Step 1: a network side device transmits configuration information to the UE, and the configuration information includes one or more types of the following information.

Configuration information 1: first indication information, used to indicate that in case that the UE expects model update at a UE side/network side for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects model update at a UE side/network side, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.

Configuration information 2: first timer information, such as a *ProhibitTimer* value, this *ProhibitTimer* is used to prevent the UE from frequently reporting the assistance information.

In an embodiment, step 1 is an optional step, that is, it is not a step that must be executed.

Step 2: in case that the UE expects model update at a UE side/network side for the CSI compression sub use case, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) fifth sub-assistance information, indicating that the UE expects model update at a UE side/network side for the CSI compression sub use case, and the indication information may be an enumeration type, that is, {UE side, network side};
(2) fifth sub-assistance information, indicating that the UE expects model update at a UE side/network side, and the indication information may be an enumeration type, that is, {UE side, network side}; and sixth indication information, indicating it is for which use case/sub use case (that is, the CSI compression sub use case for here);
(3) fifth sub-assistance information, indicating that the UE expects model update at a UE side/network side for the CSI compression sub use case, this indication information is two separate pieces of indication information, one piece of indication information indicates that the UE expects model update at a UE side, and the other piece of indication information indicates that the UE expects model update at a network side; or
(4) fifth sub-assistance information, indicating that the UE expects model update at a UE side/network side, this indication information is two separate pieces of indication information, one piece of indication information indicates that the UE expects model update at a UE side, and the other piece of indication information indicates that the UE expects to model update at a network side; and sixth indication information, indicating it is for which use case/sub use case (that is, the CSI compression sub use case for here).

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device, , may decide that, in combination with some other situations or information depending on an implementation of the network side device, model update is whether at the UE side or the network side for the CSI compression sub use case.

Step 4: the network side device notifies the UE of a decision result of the network side device, i.e., the model update is whether at the UE side or the network side.

Step 4 is an optional step.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects model update at a UE side/network side for a certain use case/certain use cases or a certain sub use case/certain sub use cases, the UE may transmit overall assistance information to indicate that the UE expects model update at a UE side/network side, which is not for a specific use case/sub use case.

In an embodiment, in case that the first assistance information includes the sixth sub-assistance information, the first assistance information includes:
second indication information, where the second indication information is used to indicate a cause why the terminal expects to change the model of the AI and/or ML, or a cause why the terminal expects to activate the model of the AI and/or ML, or a cause why the terminal expects to deactivate the model of the AI and/or ML.

In an embodiment, the UE reports that the UE expects model change/switching/activation/deactivation. Taking the CSI compression sub use case as an example, if there are 5 AI/ML models, whose id=1, id=2, id=3, id=4, id=5, at the UE side for CSI compression, and there are 5 AI/ML models, whose id=6, id=7, id=8, id=9, id=10 at the network side for CSI decompression. The UE side is currently using the AI/ML model whose id=1 for CSI compression, and correspondingly, the network side uses the AI/ML model whose id=6 for CSI decompression. A reporting procedure may include the following steps.

Step 1: a network side device transmits configuration information to the UE, and the configuration information includes one or more types of the following information.

Configuration information 1: first indication information, used to indicate that in case that the UE expects model change/switching/activation/deactivation for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects model change/switching/activation/deactivation, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects to change/switch/activate/deactivate an AI/ML model for the CSI compression sub use case, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) sixth sub-assistance information, indicating that the UE expects to change/switch/activate/deactivate an AI/ML model for the CSI compression sub use case, and the indication information is a piece of whole 1-bit indication information;
(2) sixth sub-assistance information, indicating that the UE expects to change/switch/activate/deactivate an AI/ML model; and sixth indication information, indicating it is for which use case/sub use case (that is, the CSI compression sub use case for here); or
(3) second indication information, such as a cause value, which may indicate that the model performance is poor or the model is not applicable, etc.

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide, in combination with some other situations or information depending on an implementation of the network side device, whether to change/switch/activate/deactivate the AI/ML model.

Step 4: in case that the network side device decides to change/switch/activate/deactivate the AI/ML model, the network side device transmits an indication to the UE to indicate the UE to change/switch/activate/deactivate the AI/ML model.

Step 5: The UE changes/switches/activates/deactivates the AI/ML model based on the indication form the network side device.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case.

In an embodiment, in case that the first assistance information includes the eighth sub-assistance information, the first assistance information includes:
third indication information, where the third indication information is used to indicate a reason why the terminal expects to update the model of the AI and/or ML.

In an embodiment, the UE reports that the UE expects model update. Taking the CSI compression sub use case as an example, the UE side currently stores an AI/ML model for CSI compression, and a reporting procedure may include the following steps.

Step 1: a network side device transmits configuration information to the UE, and the configuration information includes one or more types of the following information.
(1) Configuration information 1: first indication information, used to indicate that in case that the UE expects model update for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.
   Configuration information 1 may also be a piece of indication information indicating that in case that the UE expects model update, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.
(2) Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects to update an AI/ML model, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) eighth sub-assistance information, indicating that the UE expects to update a model for the CSI compression sub use case;
(2) eighth sub-assistance information, indicating that the UE expects to update a model; and sixth indication information, indicating it is for which use case/sub use case (that is, the CSI compression sub use case for here); or
(3) third indication information, such as a cause value, which may indicate that the model performance is poor or the model is not applicable, etc.

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide, in combination with some other situations or information depending on an implementation of the network side device, whether to perform the model update.

Step 4: in case that the network side device decides to perform the model update, the network side device transmits an indication to the UE to indicate the UE to update the AI/ML model.

Step 5: The UE updates the model based on the indication form the network side device.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects to model update for a certain use case/certain use cases or a certain sub use case/certain sub use cases, the UE may transmit overall assistance information to indicate that the UE expects model update, which is not for a specific use case/sub use case.

In an embodiment, in case that the first assistance information includes the ninth sub-assistance information, the first assistance information includes:
fourth indication information, where the fourth indication information is used to indicate a reason why the terminal expects to use the AI and/or ML-based way, or the fourth indication information is used to indicate a reason why the terminal expects to use the non-AI and/or ML-based way.

In an embodiment, the UE reports that the UE expects to use the AI and/or ML-based way or the non-AI and/or ML-based way. Taking the CSI compression sub use case as an example, a reporting procedure may include the following steps.

Step 1: a network side device transmits configuration information to the UE, and the configuration information includes one or more types of the following information.

Configuration information 1: first indication information, used to indicate that in case that the UE expects to use the AI and/or ML-based way or the non-AI and/or ML-based way for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects to use the AI and/or ML-based way or the non-AI and/or ML-based way, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects to use the AI and/or ML-based way or the non-AI and/or ML-based way, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) ninth sub-assistance information, indicating that the UE expects to use the AI and/or ML-based way or the non-AI and/or ML-based way for the CSI compression sub use case, this indication information may be an enumeration type, that is, {AI and/or ML-based way, non-AI and/or ML-based way};
(2) ninth sub-assistance information, indicating that the UE expects to use the AI and/or ML-based way or the non-AI and/or ML-based way, this indication information may be an enumeration type, that is, {AI and/or ML-based way, non-AI and/or ML-based way}; and sixth indication information, indicating it is for which use case/sub use case (that is, the CSI compression sub use case for here);
(3) ninth sub-assistance information, indicating that the UE expects to use the AI and/or ML-based way or the non-AI and/or ML-based way for the CSI compression sub use case, this indication information is two separate pieces of indication information, one piece of indication information indicates that the UE expects to use the AI and/or ML-based way, and the other piece of indication information indicates that the UE expects to use the non-AI and/or ML-based way;
(4) ninth sub-assistance information, indicating that the UE expects to use the AI and/or ML-based way or the non-AI and/or ML-based way, this indication information is two separate pieces of indication information, one piece of indication information indicates that the UE expects to use the AI and/or ML-based way, and the other piece of indication information indicates that the UE expects to use the non-AI and/or ML-based way; and sixth indication information, indicating it is for which use case/sub use case (that is, the CSI compression sub use case for here); or
(5) fourth indication information, such as a cause value, which may indicate that the performance of the AI/ML model is poor, the performance of the AI/ML model is good, overhead is too large, overheating, etc.

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide, in combination with some other situations or information depending on an implementation of the network side device, whether to use the AI and/or ML-based way or the non-AI and/or ML-based way.

Step 4: the network side device notifies the UE of a decision result (i.e., whether to use the AI and/or ML-based way or the non-AI and/or ML-based way).

Step 4 is an optional step.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects to use the AI and/or ML-based way or the non-AI and/or ML-based way for a certain use case/certain use cases or a certain sub use case/certain sub use cases, the UE may transmit overall assistance information to indicate that the UE expects to use the AI and/or ML-based way or the non-AI and/or ML-based way, which is not for a specific use case/sub use case.

In an embodiment, in case that the first assistance information includes the tenth sub-assistance information, the first assistance information includes:
fifth indication information, where the fifth indication information is used to indicate a reason why the terminal expects to fall back the model of the AI and/or ML.

In an embodiment, the UE reports that the UE expects model fallback. Taking the CSI compression sub use case as an example, the UE side currently stores an AI/ML model for CSI compression, and a reporting procedure may include the following steps.

Step 1: a network side device transmits configuration information to the UE, and the configuration information includes one or more types of the following information.

Configuration information 1: first indication information, used to indicate that in case that the UE expects model fallback for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects model fallback, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects model fallback, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) tenth sub-assistance information, indicating that the UE expects model fallback for the CSI compression sub use case;
(2) tenth sub-assistance information, indicating that the UE expects model fallback; and sixth indication information, indicating it is for which use case/sub use case (that is, the CSI compression sub use case for here); or
(3) fifth indication information, such as a cause value, which may indicate that a UE has insufficient memory, or overhead is too large, etc.

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide, in combination with some other situations or information depending on an implementation of the network side device, whether to perform the model fallback.

Step 4: in case that the network side device decides to perform the model fallback, the network side device transmits an indication to the UE to notify the UE to perform the model fallback.

Step 5: The UE performs the model fallback based on the indication form the network side device.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects model fallback for a certain use case/certain use cases or a certain sub use case/certain sub use cases, the UE may transmit overall assistance information to indicate that the UE expects model fallback, which is not for a specific use case/sub use case.

In an embodiment, the seventh sub-assistance information includes one or more of:
model identification information of the AI and/or ML expected or preferred by the terminal; or
model priority information of the AI and/or ML expected or preferred by the terminal.

In an embodiment, model information of the AI and/or ML expected or preferred by the terminal may include the model identification information of the AI and/or ML expected or preferred by the terminal.

In an embodiment, model information of the AI and/or ML expected or preferred by the terminal may include the model priority information of the AI or ML expected or preferred by the terminal.

For example, a model priority indicated by the seventh sub-assistance information may represents the model priority information in the form of the model identification information. For example, the model priority information may be a model identification information list, such as model id=1, model id=5, model id=6, etc. The model priority information represented in this way is that the model priority of model id=1 is higher than that of model id=5, and the model priority of model id=5 is higher than that of model id=6. Other ways may also be used, which are not limited here.

In an embodiment, the model identification information includes one or more of:
a model identifier;
a functionality identifier;
a configuration identifier;
a model parameter;
model input information; or
model output information.

In an embodiment, the model identification information may be: model id, functionality id, configuration id, model parameter, model input/output, etc.

In an embodiment, the UE reports a model recommendation/preference; taking the CSI compression sub use case as an example, if there are 5 AI/ML models, whose id=1, id=2, id=3, id=4, id=5 at the UE side for CSI compression, there are 5 AI/ML models, whose id=6, id=7, id=8, id=9, id=10 at the network side for CSI decompression. The UE side is currently using the AI/ML model whose id=1 for CSI compression, and correspondingly, the network side uses the AI/ML model whose id=6 for CSI decompression.

Step 1: a network side device transmits configuration information to the UE, and the configuration information includes one or more types of the following information.

Configuration information 1: first indication information, used to indicate that in case that the UE expects to report a model recommendation/preference for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects to report a model recommendation/preference, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects to change an AI/ML model from a model with model id 1 to a model with model id 3, or the UE expects to notify the network side of the priority information of the AI/ML model, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) eighth sub-assistance information, such as a model id value, indicating that the UE expects to change the current AI/ML model to a model with model id=3 for the CSI compression sub use case;
(2) eighth sub-assistance information, such as including a model id value and the sixth indication information, indicating that the UE expects to change the current AI/ML model to a model with model id=3, and indicating it is for which use case/sub use case, that is, the CSI compression sub use case for here;
(3) eighth sub-assistance information, such as a model priority information, indicating the model priority information expected by the UE for the CSI compression sub use case. The model priority may be in a form of a list, for example, the model priority is: id=3, id=1, id=2, id=5, id=6, id=4; or
(4) eighth sub-assistance information, such as including the model priority information and the sixth indication information, indicating the model priority information expected by the UE, the model priority may be in a form of a list, for example, the model priority is: id=3, id=1, id=2, id=5, id=6, id=4; and an indication information, indicating it is for which use case/sub use case (that is, the CSI compression sub use case for here).

In an embodiment, the model identification information may include functionality id, configuration id, model parameter, model input/output, etc., in addition to the model id here.

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the assistance information reported from the UE, the network side device may decide, in combination with some other situations or information depending on an implementation of the network side device, whether to perform model change, etc.

Step 4: in case that the network side device decides to perform the model change, the network side device transmits an indication to the UE to notify the UE to perform the model change.

Step 5: The UE performs the model change based on the indication form the network side device.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case.

In an embodiment, the above procedure may also be triggered before the UE side uses the AI/ML model.

In an embodiment, the first assistance information includes:
sixth indication information, where the sixth indication information is used to indicate one or more use cases or sub use cases corresponding to the first assistance information.

In an embodiment, the first assistance information is applicable to any AI/ML use case/sub use case, and may be per use case or per sub use case, or as a whole; for the case of per use case or per sub use case, the UE may report the second indication information to indicate the UE assistance information is for which use case or sub use case.

In an embodiment, the reporting procedure of the first assistance information in each embodiment of the present application is applicable to any AI/ML use case/sub use case, that is, it may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects to report the first assistance information, no matter it is for which use case/use cases or which sub use case/sub use cases, the UE may transmit overall assistance information to indicate that the UE has collected information and expects reporting, which is not for a specific use case/sub use case.

In the method for reporting assistance information provided in the embodiments of the present application, the terminal transmits the first assistance information to the network side device, and the first assistance information helps the model management procedure for the AI and/or ML to be implemented in the radio communication system, which improves the practicality of the AI and/or ML in the radio communication system.

FIG. 2 is a second schematic flowchart of a method for reporting assistance information according to an embodiment of the present application. As shown in FIG. 2, the method for reporting assistance information is performed by a network side device, that is, an execution subject is the network device, and the method includes:
step 200: receiving first assistance information transmitted from a terminal, where the first assistance information includes at least part of information required for implementing a model management procedure for an artificial intelligence (AI) and/or machine learning (ML).

In an embodiment, the model management procedure for the AI and/or ML may include a procedure of adjusting a model state for the AI and/or ML.

In an embodiment, the model management procedure for the AI and/or ML may include a procedure of optimizing a model for the AI and/or ML.

In an embodiment, the model management procedure for the AI and/or ML may include a procedure of applying a model for the AI and/or ML.

In an embodiment, the model management procedure for the AI and/or ML may include any procedure involving a model for the AI and/or ML, which is not limited in the embodiments of the present application.

In an embodiment, the model management procedure for the AI and/or ML includes one or more of the following life-cycle management (LCM) procedures:
data collection;
model training;
model registration;
model deployment;
model configuration;
model inference;
model selection;
model activation;
model deactivation;
model switching;
model fallback;
model monitoring;
model update;
model transfer; or
UE capability management.

In an embodiment, the terminal may transmit the first assistance information to the network side device, where the first assistance information includes at least part of information required to implement various procedures of an AI/ML LCM. That is, the terminal may transmit the first assistance information to the network side device, and the first assistance information may assist in implementing of one or more of:
data collection;
model training;
model registration;
model deployment;
model configuration;
model inference;
model selection;
model activation;
model deactivation;
model switching;
model fallback;
model monitoring;
model update;
model transfer; or
UE capability management.

In an embodiment, since an architecture of the AI and/or ML is different from that an architecture of a radio communication, the former is driven by data and the latter is driven by events or time. In order to implement relevant functions of the AI and/or ML in a radio communication system, the network side may receive the first assistance information transmitted form the terminal, where the first assistance information may include data for driving or triggering the relevant functions of the AI and/or ML, or information or instructions for driving or triggering execution of the relevant functions of the AI and/or ML.

In an embodiment, transmitting of the first assistance information may be reported through a *UEAssistanceInformation* message.

In an embodiment, a radio resource control (RRC) signaling may be introduced to carry the first assistance information dedicatedly.

In an embodiment, after receiving the first assistance information, the network side device may make a decision based on the first assistance information to obtain decision result information, where the decision result information is used to characterize whether an expectation of the terminal is met; and transmit the decision result information to the terminal.

In an embodiment, after receiving the first assistance information, the network side device may decide, in combination with some other situations or information, whether to perform a relevant procedure corresponding to the first assistance information, and transmit the decision result information to the terminal based on a decision result.

In an embodiment, the procedure of the network side device making a decision based on the first assistance information depends on a network implementation, which is not limited in the embodiments of the present application.

In the method for reporting assistance information provided in the embodiments of the present application, the terminal transmits the first assistance information to the network side device, and the first assistance information helps the model management procedure for the AI and/or ML to be implemented in the radio communication system, which improves the practicality of the AI and/or ML in the radio communication system.

In an embodiment, before receiving the first assistance information transmitted from the terminal, the method further includes:
transmitting first configuration information to the terminal, where the first configuration information is configuration information required by the terminal to report the first assistance information to the network side device.

In an embodiment, the network side device may first transmit the first configuration information to the terminal, where the first configuration information is used to configure reporting of the first assistance information, and the terminal may transmit the first assistance information to the network side device based on the first configuration information after receiving the first configuration information.

In an embodiment, the terminal does not necessarily have to report assistance information based on a network configuration, and it may be based on the network configuration or not based on the network configuration.

In an embodiment, the terminal may transmit, based on the first configuration information, the first assistance information to the network side device in case that the first configuration information is received.

In an embodiment, the terminal may also transmit, based on the first configuration information, the first assistance information to the network side device in case that the first configuration information is not received.

In an embodiment, the first configuration information includes one or more of:
first indication information, where the first indication information is used to indicate that the network side device supports reporting of the first assistance information; or
first timer information, where a first timer is used to control the terminal to report the first assistance information.

In an embodiment, the network side device may configure the first indication information and/or the first timer information *(ProhibitTimer* value) for the terminal.

In an embodiment, the first indication information may explicitly or implicitly indicate that the terminal may/needs to report assistance information that a UE expects to report data collected by the terminal. The first timer information *(ProhibitTimer* value) may control the terminal to report the assistance information that the terminal expects to report the data collected by the terminal, at most a given number of times before the timer expires. For example, the terminal is controlled to report the assistance information that the terminal expects to report the data collected by the terminal, at most once before the timer expires.

In an embodiment, the first indication information may explicitly or implicitly indicate that the terminal may/needs to report assistance information that the terminal expects the network side device to transmit data collected by the network side to the terminal, used for the terminal to perform model training/model update, etc. The first timer information *(ProhibitTimer* value) controls the terminal to report the assistance information that the terminal expects the network side device to transmit the data collected by the network side to the terminal, used for the terminal to perform model training/model update, etc., at most for a given number of times before the timer expires. For example, the terminal is controlled to report the assistance information that the terminal expects the network side device to transmit the data collected by the network side to the terminal, used for the terminal to perform model training/model update, etc., at most once before the timer expires.

In an embodiment, the first indication information may explicitly or implicitly indicate that the terminal may/needs to report assistance information that the terminal expects model training at a terminal side/network side. The first timer information *(ProhibitTimer* value) may control the terminal to report the assistance information that the terminal expects model training at the terminal side/network side at most for a given number of times before the timer expires. For example, the terminal is controlled to report the assistance information that the terminal expects model training at the terminal side/network side at most once before the timer expires.

In an embodiment, the first indication information may explicitly or implicitly indicate that the terminal may/needs to report assistance information that the terminal expects model monitoring at a terminal side/network side. The first timer information *(ProhibitTimer* value) may control the terminal to report the assistance information that the terminal expects model monitoring at the terminal side/network side at most for a given number of times before the timer expires. For example, the terminal is controlled to report the assistance information that the terminal expects model monitoring at the terminal side/network side at most once before the timer expires.

In an embodiment, the first indication information may explicitly or implicitly indicate that the terminal may/needs to report assistance information that the terminal expects model monitoring at a terminal side/network side. The first timer information *(ProhibitTimer* value) may control the terminal to report the assistance information that the terminal expects to monitor, at the terminal side/network side, the model, at most for a given number of times before the timer expires. For example, the terminal is controlled to report the assistance information that the terminal expects to monitor, at the terminal side/network side, the model, at most once before the timer expires.

In an embodiment, the first indication information may explicitly or implicitly indicate that the terminal may/needs to report assistance information that the terminal expects model update at a terminal side/network side. The first timer information *(ProhibitTimer* value) may control the terminal to report the assistance information that the terminal expects model update at the terminal side/network side, at most for a given number of times before the timer expires. For example, the terminal is controlled to report the assistance information that the terminal expects model update at the terminal side/network side at most once before the timer expires.

In an embodiment, the first indication information may explicitly or implicitly indicate that the terminal may/needs to report assistance information that the terminal expects model change/switching/activation/deactivation. The first timer information *(ProhibitTimer* value) may control the terminal to report the assistance information that the terminal expects model change/switching/activation/deactivation, at most for a given number of times before the timer expires. For example, the terminal is controlled to report the assistance information that the terminal expects model change/switching/activation/deactivation, at most once before the timer expires.

In an embodiment, the first indication information may explicitly or implicitly indicate that the terminal may/needs to report assistance information of a model recommendation/preference. The first timer information *(ProhibitTimer* value) may control the terminal to report the assistance information of the model recommendation/preference at most for a given number of times before the timer expires. For example, the terminal is controlled to report the assistance information of the model recommendation/preference at most once before the timer expires.

In an embodiment, the first indication information may explicitly or implicitly indicate that the terminal may/needs to report assistance information that the terminal expects model update. The first timer information *(ProhibitTimer* value) may control the terminal to report the assistance information that the terminal expects model update at most for a given number of times before the timer expires. For example, the terminal is controlled to report the assistance information that the terminal expects model update at most once before the timer expires.

In an embodiment, the first indication information may explicitly or implicitly indicate that the terminal may/needs to report assistance information that the terminal expects to use an AI and/or ML-based way or a non-AI and/or ML-based way. The first timer information *(ProhibitTimer* value) may control the terminal to report the assistance information that the terminal expects to use the AI and/or ML-based way or the non-AI and/or ML-based way, at most for a given number of times before the timer expires. For example, the terminal is controlled to report the assistance information that the terminal expects to use the AI and/or ML-based way or the non-AI and/or ML-based way, at most once before the timer expires.

In an embodiment, the first indication information may explicitly or implicitly indicate that the terminal may/needs to report assistance information that the terminal expects to fall back an AI/ML model. The first timer information *(ProhibitTimer* value) may control the terminal to report the assistance information that the terminal expects to fall back the AI/ML model, at most for a given number of times before the timer expires. For example, the terminal is controlled to report the assistance information that the terminal expects to fall back the AI/ML model, at most once before the timer expires.

In an embodiment, the network side device may configure one or more of the following information for the UE:
a piece of indication information (explicit indication or implicit indication) and/or a *ProhibitTimer* value, where the indication information is used to indicate that the UE may/needs to report assistance information that the UE expects to report data of a UE data collection;
a piece of indication information (explicit indication or implicit indication) and/or a *ProhibitTimer* value, where the indication information is used to indicate that the UE may/needs to report assistance information that the UE expects the network side to transmit data after a data collection to the UE, used for the UE to perform model training/model update, etc.
a piece of indication information (explicit indication or implicit indication) and/or a *ProhibitTimer* value, where the indication information is used to indicate that the UE may/needs to report assistance information that the UE expects model training at a UE side/network side;
a piece of indication information (explicit indication or implicit indication) and/or a *ProhibitTimer* value, where the indication information is used to indicate that the UE may/needs to report assistance information that the UE expects model monitoring at a UE side/network side;
a piece of indication information (explicit indication or implicit indication) and/or a *ProhibitTimer* value, where the indication information is used to indicate that the UE may/needs to report assistance information that the UE expects model update at a UE side/network side;
a piece of indication information (explicit indication or implicit indication) and/or a *ProhibitTimer* value, where the indication information is used to indicate that the UE may/needs to report assistance information that the UE expects model change/switching/activation/deactivateion;
a piece of indication information (explicit indication or implicit indication) and/or a *ProhibitTimer* value, where the indication information is used to indicate that the UE may/needs to report assistance information of a model recommendation/preference;
a piece of indication information (explicit indication or implicit indication) and/or a *ProhibitTimer* value, where the indication information is used to indicate that the UE may/needs to report assistance information that the UE expects model update;
a piece of indication information (explicit indication or implicit indication) and/or a *ProhibitTimer* value, where the indication information is used to indicate that the UE may/needs to report assistance information that the UE expects to use an AI and/or ML-based way or a non-AI and/or ML-based way; or
a piece of indication information (explicit indication or implicit indication) and/or a *ProhibitTimer* value, where the indication information is used to indicate that the UE may/needs to report assistance information that the UE expects to fall back an AI/ML model.

In an embodiment, the network side device may configure a *ProhibitTimer* for the terminal to prevent the UE from frequently reporting the first assistance information.

In an embodiment, the first assistance information includes one or more of:
first sub-assistance information, where the first sub-assistance information is used to characterize that the terminal expects to report data collected by the terminal;
second sub-assistance information, where the second sub-assistance information is used to characterize that the terminal expects the network side device to transmit data collected by the network side device;
third sub-assistance information, where the third sub-assistance information is used to characterize that the terminal expects to implement, at the terminal, a model training procedure, or the third sub-assistance information is used to characterize that the terminal expects to implement, at the network side device, a model training procedure;
fourth sub-assistance information, where the fourth sub-assistance information is used to characterize that the terminal expects to implement, at the terminal, a model monitoring procedure, or the fourth sub-assistance information is used to characterize that the terminal expects to implement, at the network side device, a model monitoring procedure;
fifth sub-assistance information, where the fifth sub-assistance information is used to characterize that the terminal expects to implement, at the terminal, a model update procedure, or the fifth sub-assistance information is used to characterize that the terminal expects to implement, at the network side device, a model update procedure;
sixth sub-assistance information, where the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, where the seventh sub-assistance information is used to characterize model information of the AI and/or ML expected or preferred by the terminal;
eighth sub-assistance information, where the eighth sub-assistance information is used to characterize that the terminal expects to update a model of the AI and/or ML;
ninth sub-assistance information, where the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, where the tenth sub-assistance information is used to characterize that the terminal expects to fall back a model of the AI and/or ML.

In an embodiment, each piece of sub-assistance information may correspond to its own first timer information *ProhibitTimer,* which is configured separately or uniformly by the network side device, or determined based on default, or predefined by a protocol, or pre-set, or set in real time.

In an embodiment, multiple pieces of sub-assistance information may correspond to a unified first timer information *ProhibitTimer,* which is configured separately or uniformly by the network side device, or determined based on default, or predefined by a protocol, or pre-set, or set in real time.

In an embodiment, the data collected by the terminal may include data of a UE data collection.

In an embodiment, the data collected by the network side device may include data after a network side data collection.

In an embodiment, the model information of the AI and/or ML expected or preferred by the terminal may include a model recommendation/preference.

In an embodiment, a UE reports that the UE expects to report data of a UE data collection, and the UE is collecting data for an AI/ML data collection. Taking a channel state information (CSI) compression sub use case as an example, that is, the UE is performing the AI/ML data collection for the CSI compression sub use case, and an assistance information reporting procedure may include the following.

Step 1: a network side device transmits first configuration information to the UE, and the first configuration information includes one or more types of the following information.

Configuration information 1: first indication information, used to indicate that in case that the UE expects to report data collected for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects to report the collected data, the UE may report the assistance information to notify the network side device; and a piece of indication information indicating it is for which use case/sub use case, that is, the CSI compression sub use case for here; the former indication information may be explicitly configured or implicitly indicated, and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects to report the data collected for the CSI compression sub use case to the network side device, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) first sub-assistance information, indicating that the UE expects to report the data collected for the CSI compression sub use case to the network side device; or
(2) first sub-assistance information, indicating that the UE expects to report the collected data to the network side device, and sixth indication information, indicating which use case/sub use case the collected data is for, that is, the CSI compression sub use case in this case.

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide, in combination with some other situations or information depending on an implementation of the network side device, whether to request the UE to report the data collected for the CSI compression sub use case.

Step 4: in case that the network side device decides to request the UE to report the data collected for the CSI compression sub use case, the network side device transmits a signaling to the UE for requesting.

Step 5: the UE reports the data collected for the CSI compression sub use case to the network side device based on the request from the network side device.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects to report the collected data, no matter which use cases/sub use cases or which sub use case/sub use case the data is collected for, the UE may transmit overall assistance information to indicate that the UE now has the collected data and expects reporting, which is not for a specific use case/sub use case.

In an embodiment, a UE reports that the UE expects a network side device to transmit data after a data collection to the UE, and the UE needs a data set to complete model training/model update, etc. Taking a CSI compression sub use case as an example, that is, the UE needs the data set to complete model training/update for the CSI compression sub use case, an assistance information reporting procedure may include the following.

Step 1: a network side device transmits first configuration information to the UE, and the first configuration information includes one or more types of the following information.

Configuration information 1: first indication information, used to indicate that in case that the UE expects the network side device to transmit the data, after the data collection for the CSI compression sub use case, to the UE, for the UE to perform model training/update, etc., for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects the network side device to transmit the data after the data collection to the UE, for the UE to perform model training/update, etc., the UE may report the assistance information to notify the network side device; and a piece of indication information indicating it is for which use case/sub use case, that is, the CSI compression sub use case in this case; the former indication information may be explicitly configured or implicitly indicated, and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects the network side device to transmit the data, after the data collection for the CSI compression sub use case, to the UE, for the UE to perform model training/update, etc., for the CSI compression sub use case, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) second sub-assistance information, indicating that the UE expects the network side device to transmit the data, after the data collection for the CSI compression sub use case, to the UE, for the UE to perform model training/update, etc., for the CSI compression sub use case; or
(2) second sub-assistance information, indicating that the UE expects the network side device to transmit the data after the data collection to the UE, for the UE to perform model training/update, etc., and sixth indication information, indicating which use case/sub use case the data of the data collection is for (that is, the CSI compression sub use case for here).

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device, may decide, in combination with some other situations or information depending on an implementation of the network side device, whether to transmit the data of the data collection for the CSI compression sub use case to the UE.

Step 4: in case that the network side device decides to transmit the data of the data collection for the CSI compression sub use case to the UE, the network side device transmit the data of the data collection for the CSI compression sub use case to the UE.

Step 5: the UE receives the data of the data collection for the CSI compression sub use case from the network side device, and uses the received data for subsequent model training/update for CSI compression.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects the network side device to transmit data after a data collection for a certain use case/certain use cases or a certain sub use case/certain sub use cases, for the UE to perform model training/update, etc., for a certain use case/certain use cases or a certain sub use case/certain sub use cases, the UE may transmit overall assistance information to indicate that the UE expects the network side device to transmit the data after the data collection to the UE, for the UE to perform model training/update, which is not for a specific use case/sub use case.

In an embodiment, a UE reports that the UE expects model training at a UE side/network side. Taking a CSI compression sub use case as an example, an assistance information reporting procedure may include the following.

Step 1: a network side device transmits configuration information to the UE, and the configuration information includes one or more types of the following information.

Configuration information 1: first indication information, used to indicate that in case that the UE expects model training for the CSI compression sub use case at a UE side/network side, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects model training at a UE side/network side, the UE may report the assistance information to notify the network side device; and a piece of indication information indicating it is for which use case/sub use case (that is, the CSI compression sub use case for here); the former indication information may be explicitly configured or implicitly indicated, and the latter indication information is explicitly configured.

Configuration information 2: first timer information, such as a *ProhibitTimer* value, this *ProhibitTimer* is used to prevent the UE from frequently reporting the assistance information.

In an embodiment, step 1 is an optional step, that is, it is not a step that must be executed.

Step 2: in case that the UE expects model training for the CSI compression sub use case at a UE side/network side, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) third sub-assistance information, indicating that the UE expects model training for the CSI compression sub use case at a UE side/network side, and the indication information may be an enumeration type, that is, {UE side, network side};
(2) third sub-assistance information, indicating that the UE expects model training at a UE side/network side, and the indication information may be an enumeration type, that is, {UE side, network side}; and sixth indication information, indicating it is for which use case/sub use case (that is, the CSI compression sub use case for here);
(3) third sub-assistance information, indicating that the UE expects model training for the CSI compression sub use case at a UE side/network side, this indication information is two separate pieces of indication information, one piece of indication information indicates that the UE expects model training at a UE side, and the other piece of indication information indicates that the UE expects model training at a network side; or
(4) third sub-assistance information, indicating that the UE expects model training at a UE side/network side, this indication information is two separate pieces of indication information, one piece of indication information indicates that the UE expects model training at a UE side, and the other piece of indication information indicates that the UE expects model training at a network side; and sixth indication information, indicating it is for which use case/sub use case (that is, the CSI compression sub use case for here).

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide, in combination with some other situations or information depending on an implementation of the network side device, model training for the CSI compression sub use case is whether at the UE side or the network side.

Step 4: the network side device notifies the UE of a decision result of the network side device, i.e., the model training is whether at the UE side or the network side.

Step 4 is an optional step.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects model training at a UE side/network side for a certain use case/certain use cases or a certain sub use case/certain sub use cases, the UE may transmit overall assistance information to indicate that the UE expects model training at a UE side/network side, which is not for a specific use case/sub use case.

In an embodiment, a UE reports that the UE expects model monitoring at a UE side/network side. Taking a CSI compression sub use case as an example, an assistance information reporting procedure may include the following.

Step 1: a network side device transmits configuration information to the UE, and the configuration information includes one or more types of the following information.

Configuration information 1: first indication information, used to indicate that in case that the UE expects model monitoring at a UE side/network side, for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects model monitoring at a UE side/network side, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects model monitoring at a UE side/network side for the CSI compression sub use case, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) fourth sub-assistance information, indicating that the UE expects model monitoring at a UE side/network side for the CSI compression sub use case, and the indication information may be an enumeration type, that is, {UE side, network side};
(2) fourth sub-assistance information, indicating that the UE expects model monitoring at a UE side/network side, and the indication information may be an enumeration type, that is, {UE side, network side}; and sixth indication information, indicating it is for which use case/sub use case (that is, the CSI compression sub use case for here);
(3) fourth sub-assistance information, indicating that the UE expects model monitoring at a UE side/network side for the CSI compression sub use case, this indication information is two separate pieces of indication information, one piece of indication information indicates that the UE expects model monitoring at a UE side, and the other piece of indication information indicates that the UE expects model monitoring at a network side; or
(4) fourth sub-assistance information, indicating that the UE expects model monitoring at a UE side/network side, this indication information is two separate pieces of indication information, one piece of indication information indicates that the UE expects model monitoring at a UE side, and the other piece of indication information indicates that the UE expects model monitoring at a network side; and sixth indication information, indicating it is for which use case/sub use case (that is, the CSI compression sub use case for here).

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide that, in combination with some other situations or information depending on an implementation of the network side device, model monitoring is whether at the UE side or the network side for the CSI compression sub use case.

Step 4: the network side device notifies the UE of a decision result of the network side device, i.e., the model monitoring is whether at the UE side or the network side.

Step 4 is an optional step.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects model monitoring at a UE side/network side for a certain use case/certain use cases or a certain sub use case/certain sub use cases, the UE may transmit overall assistance information to indicate that the UE expects model monitoring at a UE side/network side, which is not for a specific use case/sub use case.

In an embodiment, a UE reports that the UE expects model update at a UE side/network side. Taking a CSI compression sub use case as an example, an assistance information reporting procedure may include the following.

Step 1: a network side device transmits configuration information to the UE, and the configuration information includes one or more types of the following information.

Configuration information 1: first indication information, used to indicate that in case that the UE expects model update at a UE side/network side for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects model update at a UE side/network side, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.

Configuration information 2: first timer information, such as a *ProhibitTimer* value, this *ProhibitTimer* is used to prevent the UE from frequently reporting the assistance information.

In an embodiment, step 1 is an optional step, that is, it is not a step that must be executed.

Step 2: in case that the UE expects model update at a UE side/network side for the CSI compression sub use case, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) fifth sub-assistance information, indicating that the UE expects model update at a UE side/network side for the CSI compression sub use case, and the indication information may be an enumeration type, that is, {UE side, network side};
(2) fifth sub-assistance information, indicating that the UE expects model update at a UE side/network side, and the indication information may be an enumeration type, that is, {UE side, network side}; and sixth indication information, indicating it is for which use case/sub use case (that is, the CSI compression sub use case for here);
(3) fifth sub-assistance information, indicating that the UE expects model update at a UE side/network side for the CSI compression sub use case, this indication information is two separate pieces of indication information, one piece of indication information indicates that the UE expects model update at a UE side, and the other piece of indication information indicates that the UE expects model update at a network side; or
(4) fifth sub-assistance information, indicating that the UE expects model update at a UE side/network side, this indication information is two separate pieces of indication information, one piece of indication information indicates that the UE expects model update, at a UE side, and the other piece of indication information indicates that the UE expects model update at a network side; and sixth indication information, indicating it is for which use case/sub use case (that is, the CSI compression sub use case for here).

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide, in combination with some other situations or information depending on an implementation of the network side device, model update is whether at the UE side or the network side for the CSI compression sub use case.

Step 4: the network side device notifies the UE of a decision result of the network side device, i.e., the model update is whether at the UE side or the network side.

Step 4 is an optional step.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects model update at a UE side/network side for a certain use case/certain use cases or a certain sub use case/certain sub use cases, the UE may transmit overall assistance information to indicate that the UE expects model update at a UE side/network side, which is not for a specific use case/sub use case.

In an embodiment, in case that the first assistance information includes the sixth sub-assistance information, the first assistance information includes:
second indication information, where the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

In an embodiment, the UE reports that the UE expects model change/switching/activation/deactivation. Taking the CSI compression sub use case as an example, if there are 5 AI/ML models, whose id=1, id=2, id=3, id=4, id=5, at the UE side for CSI compression, and there are 5 AI/ML models, whose id=6, id=7, id=8, id=9, id=10 at the network side for CSI decompression. The UE side is currently using the AI/ML model whose id=1 for CSI compression, and correspondingly, the network side uses the AI/ML model whose id=6 for CSI decompression. A reporting procedure may include the following steps.

Step 1: a network side device transmits configuration information to the UE, and the configuration information includes one or more types of the following information.

Configuration information 1: first indication information, used to indicate that in case that the UE expects to model change/switching/activation/deactivation for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects model change/switching/activation/deactivation, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects to change/switch/activate/deactivate an AI/ML model for the CSI compression sub use case, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) sixth sub-assistance information, indicating that the UE expects to change/switch/activate/deactivate an AI/ML model for the CSI compression sub use case, and the indication information is a piece of whole 1-bit indication information;
(2) sixth sub-assistance information, indicating that the UE expects to change/switch/activate/deactivate an AI/ML model; and sixth indication information, indicating it is for which use case/sub use case (that is, the CSI compression sub use case for here); or
(3) second indication information, such as a cause value, which may indicate that the model performance is poor or the model is not applicable, etc.;

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide, in combination with some other situations or information depending on an implementation of the network side device, whether to change/switch/activate/deactivate the AI/ML model.

Step 4: in case that the network side device decides to change/switch/activate/deactivate the AI/ML model, the network side device transmits an indication to the UE to indicate the UE to change/switch/activate/deactivate the AI/ML model.

Step 5: The UE changes/switches/activates/deactivates the AI/ML model based on the indication form the network side device.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case.

In an embodiment, in case that the first assistance information includes the eighth sub-assistance information, the first assistance information includes:
third indication information, where the third indication information is used to indicate a reason why the terminal expects to update the model of the AI and/or ML.

In an embodiment, the UE reports that the UE expects model update. Taking the CSI compression sub use case as an example, the UE side currently stores an AI/ML model for CSI compression, and a reporting procedure may include the following steps.

Step 1: a network side device transmits configuration information to the UE, and the configuration information includes one or more types of the following information.
(1) Configuration information 1: first indication information, used to indicate that in case that the UE expects model update for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.
   Configuration information 1 may also be a piece of indication information indicating that in case that the UE expects model update, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.
(2) Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects to update an AI/ML model, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) eighth sub-assistance information, indicating that the UE expects model update for the CSI compression sub use case;
(2) eighth sub-assistance information, indicating that the UE expects model update; and sixth indication information, indicating it is for which use case/sub use case (that is, the CSI compression sub use case for here); or
(3) third indication information, such as a cause value, which may indicate that the model performance is poor or the model is not applicable, etc.;

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide, in combination with some other situations or information depending on an implementation of the network side device, whether to perform the model update.

Step 4: in case that the network side device decides to perform the model update, the network side device transmits an indication to the UE to indicate the UE to update the AI/ML model.

Step 5: The UE updates the model based on the indication form the network side device.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects model update for a certain use case/certain use cases or a certain sub use case/certain sub use cases, the UE may transmit overall assistance information to indicate that the UE expects model update, which is not for a specific use case/sub use case.

In an embodiment, in case that the first assistance information includes the ninth sub-assistance information, the first assistance information includes:
fourth indication information, where the fourth indication information is used to indicate a reason why the terminal expects to use the AI and/or ML-based way, or the fourth indication information is used to indicate a reason why the terminal expects to use the non-AI and/or ML-based way.

In an embodiment, the UE reports that the UE expects to use the AI and/or ML-based way or the non-AI and/or ML-based way. Taking the CSI compression sub use case as an example, a reporting procedure may include the following steps.

Step 1: a network side device transmits configuration information to the UE, and the configuration information includes one or more types of the following information.

Configuration information 1: first indication information, used to indicate that in case that the UE expects to use the AI and/or ML-based way or the non-AI and/or ML-based way for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects to use the AI and/or ML-based way or the non-AI and/or ML-based way, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects to use the AI and/or ML-based way or the non-AI and/or ML-based way, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) ninth sub-assistance information, indicating that the UE expects to use the AI and/or ML-based way or the non-AI and/or ML-based way for the CSI compression sub use case, this indication information may be an enumeration type, that is, {AI and/or ML-based way, non-AI and/or ML-based way};
(2) ninth sub-assistance information, indicating that the UE expects to use the AI and/or ML-based way or the non-AI and/or ML-based way, this indication information may be an enumeration type, that is, {AI and/or ML-based way, non-AI and/or ML-based way}; and sixth indication information, indicating it is for which use case/sub use case (that is, the CSI compression sub use case for here);
(3) ninth sub-assistance information, indicating that the UE expects to use the AI and/or ML-based way or the non-AI and/or ML-based way for the CSI compression sub use case, this indication information is two separate pieces of indication information, one piece of indication information indicates that the UE expects to use the AI and/or ML-based way, and the other piece of indication information indicates that the UE expects to use the non-AI and/or ML-based way;
(4) ninth sub-assistance information, indicating that the UE expects to use the AI and/or ML-based way or the non-AI and/or ML-based way, this indication information is two separate pieces of indication information, one piece of indication information indicates that the UE expects to use the AI and/or ML-based way, and the other piece of indication information indicates that the UE expects to use the non-AI and/or ML-based way; and sixth indication information, indicating it is for which use case/sub use case (that is, the CSI compression sub use case for here); or
(5) fourth indication information, such as a cause value, which may indicate that the performance of the AI/ML model is poor, the performance of the AI/ML model is good, overhead is too large, overheating, etc.

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide, in combination with some other situations or information depending on an implementation of the network side device, whether to use the AI and/or ML-based way or the non-AI and/or ML-based way.

Step 4: the network side device notifies the UE of a decision result (i.e., whether to use the AI and/or ML-based way or the non-AI and/or ML-based way).

Step 4 is an optional step.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects to use the AI and/or ML-based way or the non-AI and/or ML-based way for a certain use case/certain use cases or a certain sub use case/certain sub use cases, the UE may transmit overall assistance information to indicate that the UE expects to use the AI and/or ML-based way or the non-AI and/or ML-based way, which is not for a specific use case/sub use case.

In an embodiment, in case that the first assistance information includes the tenth sub-assistance information, the first assistance information includes:
fifth indication information, where the fifth indication information is used to indicate a reason why the terminal expects to fall back the model of the AI and/or ML.

In an embodiment, the UE reports that the UE expects model fallback. Taking the CSI compression sub use case as an example, the UE side currently stores an AI/ML model for CSI compression, and a reporting procedure may include the following steps.

Step 1: a network side device transmits configuration information to the UE, and the configuration information includes one or more types of the following information.

Configuration information 1: first indication information, used to indicate that in case that the UE expects to model fallback for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects model fallback, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects model fallback, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) tenth sub-assistance information, indicating that the UE expects model fallback for the CSI compression sub use case;
(2) tenth sub-assistance information, indicating that the UE expects model fallback; and sixth indication information, indicating it is for which use case/sub use case (that is, the CSI compression sub use case for here); or
(3) fifth indication information, such as a cause value, which may indicate that a UE has insufficient memory, or overhead is too large, etc.

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the first assistance information reported from the UE, the network side device may decide, in combination with some other situations or information depending on an implementation of the network side device, whether to perform the model fallback.

Step 4: in case that the network side device decides to perform the model fallback, the network side device transmits an indication to the UE to notify the UE to perform the model fallback.

Step 5: The UE performs the model fallback based on the indication form the network side device.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects model fallback for a certain use case/certain use cases or a certain sub use case/certain sub use cases, the UE may transmit overall assistance information to indicate that the UE expects model fallback, which is not for a specific use case/sub use case.

In an embodiment, the seventh sub-assistance information includes one or more of:
model identification information of the AI and/or ML expected or preferred by the terminal; or
model priority information of the AI and/or ML expected or preferred by the terminal.

In an embodiment, model information of the AI and/or ML expected or preferred by the terminal may include the model identification information of the AI and/or ML expected or preferred by the terminal.

In an embodiment, model information of the AI and/or ML expected or preferred by the terminal may include the model priority information of the AI or ML expected or preferred by the terminal.

For example, a model priority indicated by the seventh sub-assistance information may represents the model priority information in the form of the model identification information. For example, the model priority information may be a model identification information list, such as model id=1, model id=5, model id=6, etc. The model priority information represented in this way is that the model priority of model id=1 is higher than that of model id=5, and the model priority of model id=5 is higher than that of model id=6. Other ways may also be used, which are not limited here.

In an embodiment, the model identification information includes one or more of:
a model identifier;
a functionality identifier;
a configuration identifier;
a model parameter;
model input information; or
model output information.

In an embodiment, the model identification information may be: model id, functionality id, configuration id, model parameter, model input/output, etc.

In an embodiment, the model identification information may be: model id, functionality id, configuration id, model parameter, model input/output, etc.

In an embodiment, the UE reports a model recommendation/preference; taking the CSI compression sub use case as an example, if there are 5 AI/ML models, whose id=1, id=2, id=3, id=4, id=5 at the UE side for CSI compression, there are 5 AI/ML models, whose id=6, id=7, id=8, id=9, id=10 at the network side for CSI decompression. The UE side is currently using the AI/ML model whose id=1 for CSI compression, and correspondingly, the network side uses the AI/ML model whose id=6 for CSI decompression.

Step 1: a network side device transmits configuration information to the UE, and the configuration information includes one or more types of the following information.

Configuration information 1: first indication information, used to indicate that in case that the UE expects to report a model recommendation/preference for the CSI compression sub use case, the UE may report assistance information to notify the network side device; this indication information may be explicitly configured or implicitly indicated, such as in case that the network side device configures a *ProhibitTimer* value for reporting this assistance information, it may be implicitly indicated that reporting of this assistance information is supported.

Configuration information 1 may also be a piece of indication information indicating that in case that the UE expects to report a model recommendation/preference, the UE may report the assistance information to notify the network side device; and a piece of indication information indicating it is for which use case/sub use case (that is, the CSI compression sub use case for here); the former indication information may be explicitly configured or implicitly indicated (the way may be the same as above), and the latter indication information is explicitly configured.

Configuration information 2: first timer information, such as a *ProhibitTimer* value, this *ProhibitTimer* is used to prevent the UE from frequently reporting the assistance information.

In an embodiment, step 1 may be configured to the UE in advance without time limit.

In an embodiment, step 1 is an optional step, that is, it is not a step that must be executed.

Step 2: in case that the UE expects to change an AI/ML model from a model with model id 1 to a model with model id 3, or the UE expects to notify the network side of the priority information of the AI/ML model, if the *ProhibitTimer* value is configured, the UE starts the *ProhibitTimer;* if there is no *ProhibitTimer,* the UE skips starting the *ProhibitTimer;* and the UE initializes and reports the assistance information to the network side device. The reporting signaling may be a first assistance information message or an RRC signaling may be introduced to report the first assistance information message. The first assistance information may include at least one of:
(1) eighth sub-assistance information, such as a model id value, indicating that the UE expects to change the current AI/ML model to a model with model id=3 for the CSI compression sub use case;
(2) eighth sub-assistance information, such as including a model id value and the sixth indication information, indicating that the UE expects to change the current AI/ML model to a model with model id=3, and indicating it is for which use case/sub use case, that is, the CSI compression sub use case for here;
(3) eighth sub-assistance information, such as a model priority information, indicating the model priority information expected by the UE for the CSI compression sub use case. The model priority may be in a form of a list, for example, the model priority is: id=3, id=1, id=2, id=5, id=6, id=4; or
(4) eighth sub-assistance information, such as including the model priority information and the sixth indication information, indicating the model priority information expected by the UE, the model priority may be in a form of a list, for example, the model priority is: id=3, id=1, id=2, id=5, id=6, id=4; and an indication information, indicating it is for which use case/sub use case (that is, the CSI compression sub use case for here).

In an embodiment, the model identification information may include functionality id, configuration id, model parameter, model input/output, etc., in addition to the model id here.

In an embodiment, the sixth indication information in step 1 and step 2 indicates it is for which use case/sub use case, and a specific form of the sixth indication information may be an enumeration type, such as {CSI feedback enhancement, beam management, positioning accuracy enhancement}, or {CSI compression, time domain CSI prediction, time domain beam prediction, spatial domain beam prediction, UE assisted positioning, direct positioning}.

Step 3: after receiving the assistance information reported from the UE, the network side device may decide, in combination with some other situations or information depending on an implementation of the network side device, whether to perform model change, etc.

Step 4: in case that the network side device decides to perform the model change, the network side device transmits an indication to the UE to notify the UE to perform the model change.

Step 5: The UE performs the model change based on the indication form the network side device.

In an embodiment, the above procedure is applicable to any AI/ML use case/sub use case, that is, the above procedure may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case.

In an embodiment, the above procedure may also be triggered before the UE side uses the AI/ML model.

In an embodiment, the first assistance information includes:
sixth indication information, where the sixth indication information is used to indicate one or more use cases or sub use cases corresponding to the first assistance information.

In an embodiment, the first assistance information is applicable to any AI/ML use case/sub use case, and may be per use case or per sub use case, or as a whole; for the case of per use case or per sub use case, the UE may report the second indication information to indicate the UE assistance information is for which use case or sub use case.

In an embodiment, the reporting procedure of the first assistance information in each embodiment of the present application is applicable to any AI/ML use case/sub use case, that is, it may also be applied to use cases such as CSI feedback enhancement, beam management, positioning accuracy enhancement, etc., or sub use cases such as CSI prediction, time domain beam prediction, spatial domain beam prediction, UE assisted positioning, direct positioning, etc. That is, this configuration information and the assistance information are per use case or per sub use case. In an embodiment, this configuration information and assistance information may also be for the whole, that is, the indication information and the *ProhibitTimer* value configured by the network side device are for the whole, without distinguishing between use case/sub use case. In case that the UE expects to report the first assistance information, no matter it is for which use case/use cases or which sub use case/sub use cases, the UE may transmit overall assistance information to indicate that the UE has collected information and expects reporting, which is not for a specific use case/sub use case.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

FIG. 3 is a schematic structural diagram of a network side device according to an embodiment of the present application. As shown in FIG. 3, the network side device includes a memory 320, a transceiver 300 and a processor 310, where
the memory 320 is used for storing a computer program, the transceiver 300 is used for receiving and transmitting data under control of the processor 310, and the processor 310 is used for reading the computer program in the memory 320 and performing following operations:
receiving first assistance information transmitted from a terminal, where the first assistance information includes at least part of information required for implementing a model management procedure for an artificial intelligence (AI) and/or machine learning (ML).

In an embodiment, the transceiver 300 is used for receiving and transmitting data under control of the processor 310.

In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, etc., which are well known in the art, and therefore are not further described in the present application. The bus interface provides an interface. The transceiver 300 may include multiple elements, i.e., including a transmitter and a receiver, units for providing communication with various other devices over transmission media including wireless channels, wired channels, fiber optic cables, and the like. The processor 310 is responsible for managing the bus architecture and general processing, and the memory 320 may store data used by the processor 310 when performing operations.

The processor 310 may be a central processing unit (CPU), an application specific integrated circuit (ASIC), a field-programmable gate array (FPGA), or a complex programmable logic device (CPLD), the processor may also use a multi-core architecture.

In an embodiment, before receiving the first assistance information transmitted from the terminal, the processor 310 is further used for:
transmitting first configuration information to the terminal, where the first configuration information is configuration information required by the terminal to report the first assistance information to the network side device.

In an embodiment, the first configuration information includes one or more of:
first indication information, where the first indication information is used to indicate that the network side device supports reporting of the first assistance information; or
first timer information, where a first timer is used to control the terminal to report the first assistance information.

In an embodiment, the first assistance information includes one or more of:
first sub-assistance information, where the first sub-assistance information is used to characterize that the terminal expects to report data collected by the terminal;
second sub-assistance information, where the second sub-assistance information is used to characterize that the terminal expects the network side device to transmit data collected by the network side device;
third sub-assistance information, where the third sub-assistance information is used to characterize that the terminal expects to implement, at the terminal, a model training procedure, or the third sub-assistance information is used to characterize that the terminal expects to implement, at the network side device, a model training procedure;
fourth sub-assistance information, where the fourth sub-assistance information is used to characterize that the terminal expects to implement, at the terminal, a model monitoring procedure, or the fourth sub-assistance information is used to characterize that the terminal expects to implement, at the network side device, a model monitoring procedure;
fifth sub-assistance information, where the fifth sub-assistance information is used to characterize that the terminal expects to implement, at the terminal, a model update procedure, or the fifth sub-assistance information is used to characterize that the terminal expects to implement, at the network side device, a model update procedure;
sixth sub-assistance information, where the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, where the seventh sub-assistance information is used to characterize model information of the AI and/or ML expected or preferred by the terminal;
eighth sub-assistance information, where the eighth sub-assistance information is used to characterize that the terminal expects to update a model of the AI and/or ML;
ninth sub-assistance information, where the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, where the tenth sub-assistance information is used to characterize that the terminal expects to fall back a model of the AI and/or ML.

In an embodiment, in case that the first assistance information includes the sixth sub-assistance information, the first assistance information includes:
second indication information, where the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

In an embodiment, in case that the first assistance information includes the eighth sub-assistance information, the first assistance information includes:
third indication information, where the third indication information is used to indicate a reason why the terminal expects to update the model of the AI and/or ML.

In an embodiment, in case that the first assistance information includes the ninth sub-assistance information, the first assistance information includes:
fourth indication information, where the fourth indication information is used to indicate a reason why the terminal expects to use the AI and/or ML-based way, or the fourth indication information is used to indicate a reason why the terminal expects to use the non-AI and/or ML-based way.

In an embodiment, in case that the first assistance information includes the tenth sub-assistance information, the first assistance information includes:
fifth indication information, where the fifth indication information is used to indicate a reason why the terminal expects to fall back the model of the AI and/or ML.

In an embodiment, the seventh sub-assistance information includes one or more of:
model identification information of the AI and/or ML expected or preferred by the terminal; or
model priority information of the AI and/or ML expected or preferred by the terminal.

In an embodiment, the model identification information includes one or more of:
a model identifier;
a functionality identifier;
a configuration identifier;
a model parameter;
model input information; or
model output information.

In an embodiment, the first assistance information includes:
sixth indication information, where the sixth indication information is used to indicate one or more use cases or sub use cases corresponding to the first assistance information.

It should be noted here that the above network device provided by the embodiments of the present application may implement all the method steps implemented by the above method embodiments performed by a network device, and may achieve the same effect. The same parts and beneficial effects as the same method embodiments are not repeated in the present application.

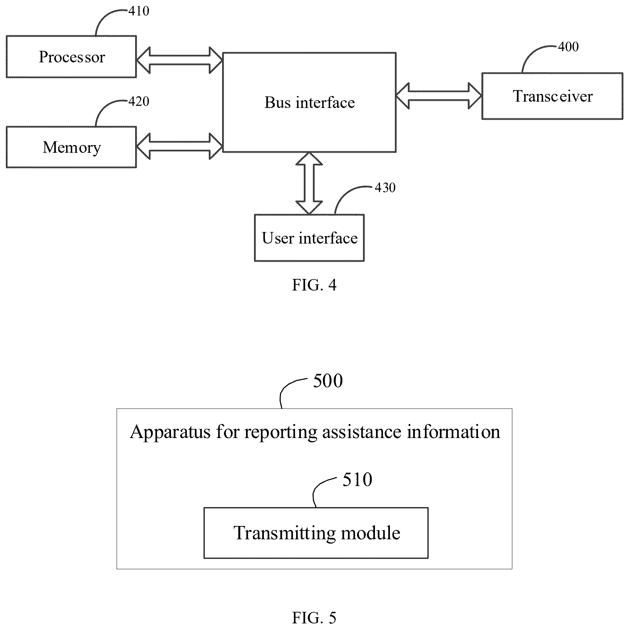

FIG. 4 is a schematic structural diagram of a terminal according to an embodiment of the present application. As shown in FIG. 4, the terminal includes a memory 420, a transceiver 400 and a processor 410, where
the memory 420 is used for storing a computer program, the transceiver 400 is used for receiving and transmitting data under control of the processor 410, and the processor 410 is used for reading the computer program in the memory 420 and performing following operations:
transmitting first assistance information to a network side device, where the first assistance information includes at least part of information required for implementing a model management procedure for an artificial intelligence (AI) and/or machine learning (ML).

In an embodiment, the transceiver 400 is used for receiving and transmitting data under control of the processor 410.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, etc., which are well known in the art, and therefore are not further described in the present application. The bus interface provides an interface. The transceiver 400 may include multiple elements, i.e., including a transmitter and a receiver, units for providing communication with various other devices over transmission media including wireless channels, wired channels, fiber optic cables, and the like. For different user equipment, a user interface 430 may be an interface capable of externally or internally connecting the required equipment, and the connected equipment includes, but not limited to, a keypad, a display, a speaker, a microphone, a joystick, and the like.

The processor 410 is responsible for managing the bus architecture and general processing, and the memory 420 may store data used by the processor 410 when performing operations.

The processor 410 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to execute any of the methods provided by the embodiments of the present application in accordance with the obtained executable instructions. The processor and the memory may be physically arranged separately.

In an embodiment, before transmitting the first assistance information to the network side device, the processor 410 is further used for:
receiving first configuration information transmitted from the network side device, where the first configuration information is configuration information required by the terminal to report the first assistance information to the network side device.

In an embodiment, the first configuration information includes one or more of:
first indication information, where the first indication information is used to indicate that the network side device supports reporting of the first assistance information; or
first timer information, where a first timer is used to control the terminal to report the first assistance information.

In an embodiment, transmitting the first assistance information to the network side device includes one or more of:
starting a first timer; or
transmitting the first assistance information to the network side device.

In an embodiment, before transmitting the first assistance information to the network side device, the processor 410 is further used for one or more of:
determining that the terminal expects to report data collected by the terminal;
determining that the terminal expects the network side device to transmit data collected by the network side device;
determining that the terminal expects to implement, at the terminal or the network side device, a model training procedure;
determining that the terminal expects to implement, at the terminal or the network side device, a model monitoring procedure;
determining that the terminal expects to implement, at the terminal or the network side device, a model update procedure;
determining that the terminal expects to change a model of the AI and/or ML;
determining to report AI and/or ML model information expected or preferred by the terminal;
determining that the terminal expects to update a model of the AI and/or ML;
determining that the terminal expects to use an AI and/or ML-based way or a non-AI and/or ML-based way;
determining that the terminal expects to fall back a model of the AI and/or ML;
determining that the network side device configures the terminal to report the first assistance information; or
determining that the first timer is not running.

In an embodiment, the first assistance information includes one or more of:
first sub-assistance information, where the first sub-assistance information is used to characterize that the terminal expects to report data collected by the terminal;
second sub-assistance information, where the second sub-assistance information is used to characterize that the terminal expects the network side device to transmit data collected by the network side device;
third sub-assistance information, where the third sub-assistance information is used to characterize that the terminal expects to implement, at the terminal, a model training procedure, or the third sub-assistance information is used to characterize that the terminal expects to implement, at the network side device, a model training procedure;
fourth sub-assistance information, where the fourth sub-assistance information is used to characterize that the terminal expects to implement, at the terminal, a model monitoring procedure, or the fourth sub-assistance information is used to characterize that the terminal expects to implement, at the network side device, a model monitoring procedure;
fifth sub-assistance information, where the fifth sub-assistance information is used to characterize that the terminal expects to implement, at the terminal, a model update procedure, or the fifth sub-assistance information is used to characterize that the terminal expects to implement, at the network side device, a model update procedure;
sixth sub-assistance information, where the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, where the seventh sub-assistance information is used to characterize model information of the AI and/or ML expected or preferred by the terminal;
eighth sub-assistance information, where the eighth sub-assistance information is used to characterize that the terminal expects to update a model of the AI and/or ML;
ninth sub-assistance information, where the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, where the tenth sub-assistance information is used to characterize that the terminal expects to fall back a model of the AI and/or ML.

In an embodiment, in case that the first assistance information includes the sixth sub-assistance information, the first assistance information includes:
second indication information, where the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

In an embodiment, in case that the first assistance information includes the eighth sub-assistance information, the first assistance information includes:
third indication information, where the third indication information is used to indicate a reason why the terminal expects to update the model of the AI and/or ML.

In an embodiment, in case that the first assistance information includes the ninth sub-assistance information, the first assistance information includes:
fourth indication information, where the fourth indication information is used to indicate a reason why the terminal expects to use the AI and/or ML-based way, or the fourth indication information is used to indicate a reason why the terminal expects to use the non-AI and/or ML-based way.

In an embodiment, in case that the first assistance information includes the tenth sub-assistance information, the first assistance information includes:
fifth indication information, where the fifth indication information is used to indicate a reason why the terminal expects to fall back the model of the AI and/or ML.

In an embodiment, the seventh sub-assistance information includes one or more of:
model identification information of the AI and/or ML expected or preferred by the terminal; or
model priority information of the AI and/or ML expected or preferred by the terminal.

In an embodiment, the model identification information includes one or more of:
a model identifier;
a functionality identifier;
a configuration identifier;
a model parameter;
model input information; or
model output information.

In an embodiment, the first assistance information includes:
sixth indication information, where the sixth indication information is used to indicate one or more use cases or sub use cases corresponding to the first assistance information.

It should be noted here that the above terminal provided by the embodiments of the present application may implement all the method steps implemented by the above method embodiments performed by a terminal, and may achieve the same effect. The same parts and beneficial effects as the same method embodiments are not repeated in the present application.

FIG. 5 is a first schematic structural diagram of an apparatus for reporting assistance information according to an embodiment of the present application. As shown in FIG. 5, the apparatus for reporting assistance information 500 includes:
a transmitting module 510, used for transmitting first assistance information to a network side device, where the first assistance information includes at least part of information required for implementing a model management procedure for an artificial intelligence (AI) and/or machine learning (ML).

In the apparatus for reporting assistance information provided in the embodiments of the present application, the terminal transmits the first assistance information to the network side device, and the first assistance information helps the model management procedure for the AI and/or ML to be implemented in the radio communication system, which improves the practicality of the AI and/or ML in the radio communication system.

It should be noted here that the above apparatus provided by the embodiments of the present application may implement all the method steps implemented by the above method embodiments, and may achieve the same effect. The same parts and beneficial effects as the same method embodiments are not repeated in the present application.

In an embodiment, the apparatus further includes:
a configuration information receiving module, used for, before transmitting the first assistance information to the network side device, receiving first configuration information transmitted from the network side device, where the first configuration information is configuration information required by a terminal to report the first assistance information to the network side device.

In an embodiment, the first configuration information includes one or more of:
first indication information, where the first indication information is used to indicate that the network side device supports reporting of the first assistance information; or
first timer information, where a first timer is used to control the terminal to report the first assistance information.

In an embodiment, the transmitting module 510 is used for one or more of:
starting a first timer; or
transmitting the first assistance information to the network side device.

In an embodiment, the apparatus further includes:
a performing module, used for, before transmitting the first assistance information to the network side device, performing one or more of:
determining that a terminal expects to report data collected by the terminal;
determining that a terminal expects the network side device to transmit data collected by the network side device;
determining that a terminal expects to implement, at the terminal or the network side device, a model training procedure;
determining that a terminal expects to implement, at the terminal or the network side device, a model monitoring procedure;
determining that a terminal expects to implement, at the terminal or the network side device, a model update procedure;
determining that a terminal expects to change a model of the AI and/or ML;
determining to report AI and/or ML model information expected or preferred by a terminal;
determining that a terminal expects to update a model of the AI and/or ML;
determining that a terminal expects to use an AI and/or ML-based way or a non-AI and/or ML-based way;
determining that a terminal expects to fall back a model of the AI and/or ML;
determining that the network side device configures a terminal to report the first assistance information; or
determining that the first timer is not running.

In an embodiment, the first assistance information includes one or more of:
first sub-assistance information, where the first sub-assistance information is used to characterize that a terminal expects to report data collected by the terminal;
second sub-assistance information, where the second sub-assistance information is used to characterize that a terminal expects the network side device to transmit data collected by the network side device;
third sub-assistance information, where the third sub-assistance information is used to characterize that a terminal expects to implement, at the terminal, a model training procedure, or the third sub-assistance information is used to characterize that a terminal expects to implement, at the network side device, a model training procedure;
fourth sub-assistance information, where the fourth sub-assistance information is used to characterize that a terminal expects to implement, at the terminal, a model monitoring procedure, or the fourth sub-assistance information is used to characterize that a terminal expects to implement, at the network side device, a model monitoring procedure;
fifth sub-assistance information, where the fifth sub-assistance information is used to characterize that a terminal expects to implement, at the terminal, a model update procedure, or the fifth sub-assistance information is used to characterize that a terminal expects to implement, at the network side device, a model update procedure;
sixth sub-assistance information, where the sixth sub-assistance information is used to characterize that a terminal expects to change a model of the AI and/or ML, or the sixth sub-assistance information is used to characterize that a terminal expects to activate a model of the AI and/or ML, or the sixth sub-assistance information is used to characterize that a terminal expects to deactivate a model of the AI and/or ML;
seventh sub-assistance information, where the seventh sub-assistance information is used to characterize model information of the AI and/or ML expected or preferred by a terminal;
eighth sub-assistance information, where the eighth sub-assistance information is used to characterize that a terminal expects to update a model of the AI and/or ML;
ninth sub-assistance information, where the ninth sub-assistance information is used to characterize that a terminal expects to use an AI and/or ML-based way, or the ninth sub-assistance information is used to characterize that a terminal expects to use a non-AI and/or ML-based way; or
tenth sub-assistance information, where the tenth sub-assistance information is used to characterize that a terminal expects to fall back a model of the AI and/or ML.

In an embodiment, in case that the first assistance information includes the sixth sub-assistance information, the first assistance information includes:
second indication information, where the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

In an embodiment, in case that the first assistance information includes the eighth sub-assistance information, the first assistance information includes:
third indication information, where the third indication information is used to indicate a reason why the terminal expects to update the model of the AI and/or ML.

In an embodiment, in case that the first assistance information includes the ninth sub-assistance information, the first assistance information includes:
fourth indication information, where the fourth indication information is used to indicate a reason why the terminal expects to use the AI and/or ML-based way, or the fourth indication information is used to indicate a reason why the terminal expects to use the non-AI and/or ML-based way.

In an embodiment, in case that the first assistance information includes the tenth sub-assistance information, the first assistance information includes:
fifth indication information, where the fifth indication information is used to indicate a reason why the terminal expects to fall back the model of the AI and/or ML.

In an embodiment, the seventh sub-assistance information includes one or more of:
model identification information of the AI and/or ML expected or preferred by the terminal; or
model priority information of the AI and/or ML expected or preferred by the terminal.

In an embodiment, the model identification information includes one or more of:
a model identifier;
a functionality identifier;
a configuration identifier;
a model parameter;
model input information; or
model output information.

In an embodiment, the first assistance information includes:
sixth indication information, where the sixth indication information is used to indicate one or more use cases or sub use cases corresponding to the first assistance information.

It should be noted here that the above apparatus provided by the embodiments of the present application may implement all the method steps implemented by the above method embodiments, and may achieve the same effect. The same parts and beneficial effects as the same method embodiments are not repeated in the present application.

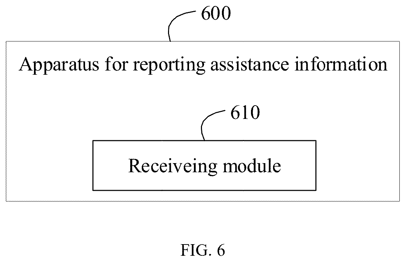

FIG. 6 is a second schematic structural diagram of an apparatus for reporting assistance information according to an embodiment of the present application. As shown in FIG. 6, the apparatus for reporting assistance information 600 includes:
a receiving module 610, used for receiving first assistance information transmitted from a terminal, where the first assistance information includes at least part of information required for implementing a model management procedure for an artificial intelligence (AI) and/or machine learning (ML).

In the apparatus for reporting assistance information provided in the embodiments of the present application, the terminal transmits the first assistance information to the network side device, and the first assistance information helps the model management procedure for the AI and/or ML to be implemented in the radio communication system, which improves the practicality of the AI and/or ML in the radio communication system.

It should be noted here that the above apparatus provided by the embodiments of the present application may implement all the method steps implemented by the above method embodiments, and may achieve the same effect. The same parts and beneficial effects as the same method embodiments are not repeated in the present application.

In an embodiment, the apparatus further includes:
a configuration information transmitting module, used for, before receiving the first assistance information transmitted from the terminal, transmitting first configuration information to the terminal, where the first configuration information is configuration information required by the terminal to report the first assistance information to a network side device.

In an embodiment, the first assistance information includes one or more of:
first sub-assistance information, where the first sub-assistance information is used to characterize that the terminal expects to report data collected by the terminal;
second sub-assistance information, where the second sub-assistance information is used to characterize that the terminal expects a network side device to transmit data collected by the network side device;
third sub-assistance information, where the third sub-assistance information is used to characterize that the terminal expects to implement, at the terminal, a model training procedure, or the third sub-assistance information is used to characterize that the terminal expects to implement a model training procedure at a network side device;
fourth sub-assistance information, where the fourth sub-assistance information is used to characterize that the terminal expects to implement, at the terminal, a model monitoring procedure, or the fourth sub-assistance information is used to characterize that the terminal expects to implement a model monitoring procedure at a network side device;
fifth sub-assistance information, where the fifth sub-assistance information is used to characterize that the terminal expects to implement, at the terminal, a model update procedure, or the fifth sub-assistance information is used to characterize that the terminal expects to implement a model update procedure at a network side device;
sixth sub-assistance information, where the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, where the seventh sub-assistance information is used to characterize model information of the AI and/or ML expected or preferred by the terminal;
eighth sub-assistance information, where the eighth sub-assistance information is used to characterize that the terminal expects to update a model of the AI and/or ML;
ninth sub-assistance information, where the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, where the tenth sub-assistance information is used to characterize that the terminal expects to fall back a model of the AI and/or ML.

In an embodiment, in case that the first assistance information includes the sixth sub-assistance information, the first assistance information includes:
second indication information, where the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

In an embodiment, in case that the first assistance information includes the eighth sub-assistance information, the first assistance information includes:
third indication information, where the third indication information is used to indicate a reason why the terminal expects to update the model of the AI and/or ML.

In an embodiment, in case that the first assistance information includes the ninth sub-assistance information, the first assistance information includes:
fourth indication information, where the fourth indication information is used to indicate a reason why the terminal expects to use the AI and/or ML-based way, or the fourth indication information is used to indicate a reason why the terminal expects to use the non-AI and/or ML-based way.

In an embodiment, in case that the first assistance information includes the tenth sub-assistance information, the first assistance information includes:
fifth indication information, where the fifth indication information is used to indicate a reason why the terminal expects to fall back the model of the AI and/or ML.

In an embodiment, the seventh sub-assistance information includes one or more of:
model identification information of the AI and/or ML expected or preferred by the terminal; or
model priority information of the AI and/or ML expected or preferred by the terminal.

In an embodiment, the model identification information includes one or more of:
a model identifier;
a functionality identifier;
a configuration identifier;
a model parameter;
model input information; or
model output information.

In an embodiment, the first assistance information includes:
sixth indication information, where the sixth indication information is used to indicate one or more use cases or sub use cases corresponding to the first assistance information.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above apparatus provided by the embodiments of the present application may implement all the method steps implemented by the above method embodiments, and may achieve the same effect. The same parts and beneficial effects as the same method embodiments are not repeated in the present application.

An embodiment of the present application further provides a processor readable storage medium storing a computer program, where the computer program is used for causing a processor to perform any of the methods provided by the above embodiments.

The processor readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for reporting assistance information, performed by a terminal, comprising:
transmitting first assistance information to a network side device, wherein the first assistance information comprises at least part of information required for implementing a model management procedure for an artificial intelligence (AI) and/or machine learning (ML).

2. The method of claim 1, wherein before transmitting the first assistance information to the network side device, the method further comprises:
receiving first configuration information transmitted from the network side device, wherein the first configuration information is configuration information required by the terminal to report the first assistance information to the network side device.

3. The method of claim 2, wherein the first configuration information comprises one or more of:
first indication information, wherein the first indication information is used to indicate that the network side device supports reporting of the first assistance information; or
first timer information, wherein a first timer is used to control the terminal to report the first assistance information.

4. The method of claim 1, wherein transmitting the first assistance information to the network side device comprises one or more of:
starting a first timer; or
transmitting the first assistance information to the network side device.

5. The method of claim 4, wherein before transmitting the first assistance information to the network side device, the method further comprises one or more of:
determining that the terminal expects to report data collected by the terminal;
determining that the terminal expects the network side device to transmit data collected by the network side device;
determining that the terminal expects to implement, at the terminal or the network side device, a model training procedure;
determining that the terminal expects to implement, at the terminal or the network side device, a model monitoring procedure;
determining that the terminal expects to implement, at the terminal or the network side device, a model update procedure;
determining that the terminal expects to change a model of the AI and/or ML;
determining to report model information of the AI and/or ML expected or preferred by the terminal;
determining that the terminal expects to update a model of the AI and/or ML;
determining that the terminal expects to use an AI and/or ML-based way or a non-AI and/or ML-based way;
determining that the terminal expects to fall back a model of the AI and/or ML;
determining that the network side device configures the terminal to report the first assistance information; or
determining that the first timer is not running.

6. The method of any of claims 1 to 5, wherein the first assistance information comprises one or more of:
first sub-assistance information, wherein the first sub-assistance information is used to characterize that the terminal expects to report data collected by the terminal;
second sub-assistance information, wherein the second sub-assistance information is used to characterize that the terminal expects the network side device to transmit data collected by the network side device;
third sub-assistance information, wherein the third sub-assistance information is used to characterize that the terminal expects to implement, at the terminal, a model training procedure, or the third sub-assistance information is used to characterize that the terminal expects to implement, at the network side device, a model training procedure;
fourth sub-assistance information, wherein the fourth sub-assistance information is used to characterize that the terminal expects to implement, at the terminal, a model monitoring procedure, or the fourth sub-assistance information is used to characterize that the terminal expects to implement, at the network side device, a model monitoring procedure;
fifth sub-assistance information, wherein the fifth sub-assistance information is used to characterize that the terminal expects to implement, at the terminal, a model update procedure, or the fifth sub-assistance information is used to characterize that the terminal expects to implement, at the network side device, a model update procedure;
sixth sub-assistance information, wherein the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, wherein the seventh sub-assistance information is used to characterize model information of the AI and/or ML expected or preferred by the terminal;
eighth sub-assistance information, wherein the eighth sub-assistance information is used to characterize that the terminal expects to update a model of the AI and/or ML;
ninth sub-assistance information, wherein the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, wherein the tenth sub-assistance information is used to characterize that the terminal expects to fall back a model of the AI and/or ML.

7. The method of claim 6, wherein in case that the first assistance information comprises the sixth sub-assistance information, the first assistance information comprises:
second indication information, wherein the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

8. The method of claim 6, wherein in case that the first assistance information comprises the eighth sub-assistance information, the first assistance information comprises:
third indication information, wherein the third indication information is used to indicate a reason why the terminal expects to update the model of the AI and/or ML.

9. The method of claim 6, wherein in case that the first assistance information comprises the ninth sub-assistance information, the first assistance information comprises:
fourth indication information, wherein the fourth indication information is used to indicate a reason why the terminal expects to use the AI and/or ML-based way, or the fourth indication information is used to indicate a reason why the terminal expects to use the non-AI and/or ML-based way.

10. The method of claim 6, wherein in case that the first assistance information comprises the tenth sub-assistance information, the first assistance information comprises:
fifth indication information, wherein the fifth indication information is used to indicate a reason why the terminal expects to fall back the model of the AI and/or ML.

11. The method of claim 6, wherein the seventh sub-assistance information comprises one or more of:
model identification information of the AI and/or ML expected or preferred by the terminal; or
model priority information of the AI and/or ML expected or preferred by the terminal.

12. The method of claim 11, wherein the model identification information comprises one or more of:
a model identifier;
a functionality identifier;
a configuration identifier;
a model parameter;
model input information; or
model output information.

13. The method of any of claims 1 to 12, wherein the first assistance information comprises:
sixth indication information, wherein the sixth indication information is used to indicate one or more use cases or sub use cases corresponding to the first assistance information.

14. A method for reporting assistance information, performed by a network side device, comprising:
receiving first assistance information transmitted from a terminal, wherein the first assistance information comprises at least part of information required for implementing a model management procedure for an artificial intelligence (AI) and/or machine learning (ML).

15. The method of claim 14, wherein before receiving the first assistance information transmitted from the terminal, the method further comprises:
transmitting first configuration information to the terminal, wherein the first configuration information is configuration information required by the terminal to report the first assistance information to the network side device.

16. The method of claim 15, wherein the first configuration information comprises one or more of:
first indication information, wherein the first indication information is used to indicate that the network side device supports reporting of the first assistance information; or
first timer information, wherein a first timer is used to control the terminal to report the first assistance information.

17. The method of any of claims 14 to 16, wherein the first assistance information comprises one or more of:
first sub-assistance information, wherein the first sub-assistance information is used to characterize that the terminal expects to report data collected by the terminal;
second sub-assistance information, wherein the second sub-assistance information is used to characterize that the terminal expects the network side device to transmit data collected by the network side device;
third sub-assistance information, wherein the third sub-assistance information is used to characterize that the terminal expects to implement, at the terminal, a model training procedure, or the third sub-assistance information is used to characterize that the terminal expects to implement, at the network side device, a model training procedure;
fourth sub-assistance information, wherein the fourth sub-assistance information is used to characterize that the terminal expects to implement, at the terminal, a model monitoring procedure, or the fourth sub-assistance information is used to characterize that the terminal expects to implement, at the network side device, a model monitoring procedure;
fifth sub-assistance information, wherein the fifth sub-assistance information is used to characterize that the terminal expects to implement, at the terminal, a model update procedure, or the fifth sub-assistance information is used to characterize that the terminal expects to implement, at the network side device, a model update procedure;
sixth sub-assistance information, wherein the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, wherein the seventh sub-assistance information is used to characterize model information of the AI and/or ML expected or preferred by the terminal;
eighth sub-assistance information, wherein the eighth sub-assistance information is used to characterize that the terminal expects to update a model of the AI and/or ML;
ninth sub-assistance information, wherein the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, wherein the tenth sub-assistance information is used to characterize that the terminal expects to fall back a model of the AI and/or ML.

18. The method of claim 17, wherein in case that the first assistance information comprises the sixth sub-assistance information, the first assistance information comprises:
second indication information, wherein the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

19. The method of claim 17, wherein in case that the first assistance information comprises the eighth sub-assistance information, the first assistance information comprises:
third indication information, wherein the third indication information is used to indicate a reason why the terminal expects to update the model of the AI and/or ML.

20. The method of claim 17, wherein in case that the first assistance information comprises the ninth sub-assistance information, the first assistance information comprises:
fourth indication information, wherein the fourth indication information is used to indicate a reason why the terminal expects to use the AI and/or ML-based way, or the fourth indication information is used to indicate a reason why the terminal expects to use the non-AI and/or ML-based way.

21. The method of claim 17, wherein in case that the first assistance information comprises the tenth sub-assistance information, the first assistance information comprises:
fifth indication information, wherein the fifth indication information is used to indicate a reason why the terminal expects to fall back the model of the AI and/or ML.

22. The method of claim 17, wherein the seventh sub-assistance information comprises one or more of:
model identification information of the AI and/or ML expected or preferred by the terminal; or
model priority information of the AI and/or ML expected or preferred by the terminal.

23. The method of claim 22, wherein the model identification information comprises one or more of:
a model identifier;
a functionality identifier;
a configuration identifier;
a model parameter;
model input information; or
model output information.

24. The method of any of claims 14 to 23, wherein the first assistance information comprises:
sixth indication information, wherein the sixth indication information is used to indicate one or more use cases or sub use cases corresponding to the first assistance information.

25. A terminal, comprising a memory, a transceiver and a processor,
wherein the memory is used for storing a computer program, the transceiver is used for receiving and transmitting data under control of the processor, and the processor is used for reading the computer program in the memory and performing following operations:
transmitting first assistance information to a network side device, wherein the first assistance information comprises at least part of information required for implementing a model management procedure for an artificial intelligence (AI) and/or machine learning (ML).

26. The terminal of claim 25, wherein before transmitting the first assistance information to the network side device, the operations further comprise:
receiving first configuration information transmitted from the network side device, wherein the first configuration information is configuration information required by the terminal to report the first assistance information to the network side device.

27. The terminal of claim 26, wherein the first configuration information comprises one or more of:
first indication information, wherein the first indication information is used to indicate that the network side device supports reporting of the first assistance information; or
first timer information, wherein a first timer is used to control the terminal to report the first assistance information.

28. The terminal of claim 25, wherein transmitting the first assistance information to the network side device comprises one or more of:
starting a first timer; or
transmitting the first assistance information to the network side device.

29. The terminal of claim 28, wherein before transmitting the first assistance information to the network side device, the operations further comprise one or more of:
determining that the terminal expects to report data collected by the terminal;
determining that the terminal expects the network side device to transmit data collected by the network side device;
determining that the terminal expects to implement, at the terminal or the network side device, a model training procedure;
determining that the terminal expects to implement, at the terminal or the network side device, a model monitoring procedure;
determining that the terminal expects to implement, at the terminal or the network side device, a model update procedure;
determining that the terminal expects to change a model of the AI and/or ML;
determining to report AI and/or ML model information expected or preferred by the terminal;
determining that the terminal expects to update a model of the AI and/or ML;
determining that the terminal expects to use an AI and/or ML-based way or a non-AI and/or ML-based way;
determining that the terminal expects to fall back a model of the AI and/or ML;
determining that the network side device configures the terminal to report the first assistance information; or
determining that the first timer is not running.

30. The terminal of any of claims 25 to 29, wherein the first assistance information comprises one or more of:
first sub-assistance information, wherein the first sub-assistance information is used to characterize that the terminal expects to report data collected by the terminal;
second sub-assistance information, wherein the second sub-assistance information is used to characterize that the terminal expects the network side device to transmit data collected by the network side device;
third sub-assistance information, wherein the third sub-assistance information is used to characterize that the terminal expects to implement, at the terminal, a model training procedure, or the third sub-assistance information is used to characterize that the terminal expects to implement, at the network side device, a model training procedure;
fourth sub-assistance information, wherein the fourth sub-assistance information is used to characterize that the terminal expects to implement, at the terminal, a model monitoring procedure, or the fourth sub-assistance information is used to characterize that the terminal expects to implement, at the network side device, a model monitoring procedure;
fifth sub-assistance information, wherein the fifth sub-assistance information is used to characterize that the terminal expects to implement, at the terminal, a model update procedure, or the fifth sub-assistance information is used to characterize that the terminal expects to implement, at the network side device, a model update procedure;
sixth sub-assistance information, wherein the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, wherein the seventh sub-assistance information is used to characterize model information of the AI and/or ML expected or preferred by the terminal;
eighth sub-assistance information, wherein the eighth sub-assistance information is used to characterize that the terminal expects to update a model of the AI and/or ML;
ninth sub-assistance information, wherein the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, wherein the tenth sub-assistance information is used to characterize that the terminal expects to fall back a model of the AI and/or ML.

31. The terminal of claim 30, wherein in case that the first assistance information comprises the sixth sub-assistance information, the first assistance information comprises:
second indication information, wherein the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

32. The terminal of claim 30, wherein in case that the first assistance information comprises the eighth sub-assistance information, the first assistance information comprises:
third indication information, wherein the third indication information is used to indicate a reason why the terminal expects to update the model of the AI and/or ML.

33. The terminal of claim 30, wherein in case that the first assistance information comprises the ninth sub-assistance information, the first assistance information comprises:
fourth indication information, wherein the fourth indication information is used to indicate a reason why the terminal expects to use the AI and/or ML-based way, or the fourth indication information is used to indicate a reason why the terminal expects to use the non-AI and/or ML-based way.

34. The terminal of claim 30, wherein in case that the first assistance information comprises the tenth sub-assistance information, the first assistance information comprises:
fifth indication information, wherein the fifth indication information is used to indicate a reason why the terminal expects to fall back the model of the AI and/or ML.

35. The terminal of claim 30, wherein the seventh sub-assistance information comprises one or more of:
model identification information of the AI and/or ML expected or preferred by the terminal; or
model priority information of the AI and/or ML expected or preferred by the terminal.

36. The terminal of claim 35, wherein the model identification information comprises one or more of:
a model identifier;
a functionality identifier;
a configuration identifier;
a model parameter;
model input information; or
model output information.

37. The terminal of any of claims 25 to 36, wherein the first assistance information comprises:
sixth indication information, wherein the sixth indication information is used to indicate one or more use cases or sub use cases corresponding to the first assistance information.

38. A network side device, comprising a memory, a transceiver and a processor,
wherein the memory is used for storing a computer program, the transceiver is used for receiving and transmitting data under control of the processor, and the processor is used for reading the computer program in the memory and performing following operations:
receiving first assistance information transmitted from a terminal, wherein the first assistance information comprises at least part of information required for implementing a model management procedure for an artificial intelligence (AI) and/or machine learning (ML).

39. The network side device of claim 38, wherein before receiving the first assistance information transmitted from the terminal, the operations further comprise:
transmitting first configuration information to the terminal, wherein the first configuration information is configuration information required by the terminal to report the first assistance information to the network side device.

40. The network side device of claim 39, wherein the first configuration information comprises one or more of:
first indication information, wherein the first indication information is used to indicate that the network side device supports reporting of the first assistance information; or
first timer information, wherein a first timer is used to control the terminal to report the first assistance information.

41. The network side device of any of claims 38 to 40, wherein the first assistance information comprises one or more of:
first sub-assistance information, wherein the first sub-assistance information is used to characterize that the terminal expects to report data collected by the terminal;
second sub-assistance information, wherein the second sub-assistance information is used to characterize that the terminal expects the network side device to transmit data collected by the network side device;
third sub-assistance information, wherein the third sub-assistance information is used to characterize that the terminal expects to implement, at the terminal, a model training procedure, or the third sub-assistance information is used to characterize that the terminal expects to implement, at the network side device, a model training procedure;
fourth sub-assistance information, wherein the fourth sub-assistance information is used to characterize that the terminal expects to implement, at the terminal, a model monitoring procedure, or the fourth sub-assistance information is used to characterize that the terminal expects to implement, at the network side device, a model monitoring procedure;
fifth sub-assistance information, wherein the fifth sub-assistance information is used to characterize that the terminal expects to implement, at the terminal, a model update procedure, or the fifth sub-assistance information is used to characterize that the terminal expects to implement, at the network side device, a model update procedure;
sixth sub-assistance information, wherein the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, wherein the seventh sub-assistance information is used to characterize model information of the AI and/or ML expected or preferred by the terminal;
eighth sub-assistance information, wherein the eighth sub-assistance information is used to characterize that the terminal expects to update a model of the AI and/or ML;
ninth sub-assistance information, wherein the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, wherein the tenth sub-assistance information is used to characterize that the terminal expects to fall back a model of the AI and/or ML.

42. The network side device of claim 41, wherein in case that the first assistance information comprises the sixth sub-assistance information, the first assistance information comprises:
second indication information, wherein the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

43. The network side device of claim 41, wherein in case that the first assistance information comprises the eighth sub-assistance information, the first assistance information comprises:
third indication information, wherein the third indication information is used to indicate a reason why the terminal expects to update the model of the AI and/or ML.

44. The network side device of claim 41, wherein in case that the first assistance information comprises the ninth sub-assistance information, the first assistance information comprises:
fourth indication information, wherein the fourth indication information is used to indicate a reason why the terminal expects to use the AI and/or ML-based way, or the fourth indication information is used to indicate a reason why the terminal expects to use the non-AI and/or ML-based way.

45. The network side device of claim 41, wherein in case that the first assistance information comprises the tenth sub-assistance information, the first assistance information comprises:
fifth indication information, wherein the fifth indication information is used to indicate a reason why the terminal expects to fall back the model of the AI and/or ML.

46. The network side device of claim 41, wherein the seventh sub-assistance information comprises one or more of:
model identification information of the AI and/or ML expected or preferred by the terminal; or
model priority information of the AI and/or ML expected or preferred by the terminal.

47. The network side device of claim 46, wherein the model identification information comprises one or more of:
a model identifier;
a functionality identifier;
a configuration identifier;
a model parameter;
model input information; or
model output information.

48. The network side device of any of claims 38 to 47, wherein the first assistance information comprises:
sixth indication information, wherein the sixth indication information is used to indicate one or more use cases or sub use cases corresponding to the first assistance information.

49. An apparatus for reporting assistance information, comprising:
a transmitting module, used for transmitting first assistance information to a network side device, wherein the first assistance information comprises at least part of information required for implementing a model management procedure for an artificial intelligence (AI) and/or machine learning (ML).

50. The apparatus of claim 49, further comprising:
a configuration information receiving module, used for, before transmitting the first assistance information to the network side device, receiving first configuration information transmitted from the network side device, wherein the first configuration information is configuration information required by a terminal to report the first assistance information to the network side device.

51. The apparatus of claim 50, wherein the first configuration information comprises one or more of:
first indication information, wherein the first indication information is used to indicate that the network side device supports reporting of the first assistance information; or
first timer information, wherein a first timer is used to control the terminal to report the first assistance information.

52. The apparatus of claim 49, wherein the transmitting module is used for one or more of:
starting a first timer; or
transmitting the first assistance information to the network side device.

53. The apparatus of claim 52, wherein the apparatus further comprises:
a performing module, used for, before transmitting the first assistance information to the network side device, performing one or more of:
determining that a terminal expects to report data collected by the terminal;
determining that a terminal expects the network side device to transmit data collected by the network side device;
determining that a terminal expects to implement, at the terminal or the network side device, a model training procedure;
determining that a terminal expects to implement, at the terminal or the network side device, a model monitoring procedure;
determining that a terminal expects to implement, at the terminal or the network side device, a model update procedure;
determining that a terminal expects to change a model of the AI and/or ML;
determining to report AI and/or ML model information expected or preferred by a terminal;
determining that a terminal expects to update a model of the AI and/or ML;
determining that a terminal expects to use an AI and/or ML-based way or a non-AI and/or ML-based way;
determining that a terminal expects to fall back a model of the AI and/or ML;
determining that the network side device configures a terminal to report the first assistance information; or
determining that the first timer is not running.

54. The apparatus of any of claims 49 to 53, wherein the first assistance information comprises one or more of:
first sub-assistance information, wherein the first sub-assistance information is used to characterize that a terminal expects to report data collected by the terminal;
second sub-assistance information, wherein the second sub-assistance information is used to characterize that a terminal expects the network side device to transmit data collected by the network side device;
third sub-assistance information, wherein the third sub-assistance information is used to characterize that a terminal expects to implement, at the terminal, a model training procedure, or the third sub-assistance information is used to characterize that a terminal expects to implement, at the network side device, a model training procedure;
fourth sub-assistance information, wherein the fourth sub-assistance information is used to characterize that a terminal expects to implement, at the terminal, a model monitoring procedure, or the fourth sub-assistance information is used to characterize that a terminal expects to implement, at the network side device, a model monitoring procedure;
fifth sub-assistance information, wherein the fifth sub-assistance information is used to characterize that a terminal expects to implement, at the terminal, a model update procedure, or the fifth sub-assistance information is used to characterize that a terminal expects to implement, at the network side device, a model update procedure;
sixth sub-assistance information, wherein the sixth sub-assistance information is used to characterize that a terminal expects to change a model of the AI and/or ML, or the sixth sub-assistance information is used to characterize that a terminal expects to activate a model of the AI and/or ML, or the sixth sub-assistance information is used to characterize that a terminal expects to deactivate a model of the AI and/or ML;
seventh sub-assistance information, wherein the seventh sub-assistance information is used to characterize model information of the AI and/or ML expected or preferred by a terminal;
eighth sub-assistance information, wherein the eighth sub-assistance information is used to characterize that a terminal expects to update a model of the AI and/or ML;
ninth sub-assistance information, wherein the ninth sub-assistance information is used to characterize that a terminal expects to use an AI and/or ML-based way, or the ninth sub-assistance information is used to characterize that a terminal expects to use a non-AI and/or ML-based way; or
tenth sub-assistance information, wherein the tenth sub-assistance information is used to characterize that a terminal expects to fall back a model of the AI and/or ML.

55. The apparatus of claim 54, wherein in case that the first assistance information comprises the sixth sub-assistance information, the first assistance information comprises:
second indication information, wherein the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

56. The apparatus of claim 54, wherein in case that the first assistance information comprises the eighth sub-assistance information, the first assistance information comprises:
third indication information, wherein the third indication information is used to indicate a reason why the terminal expects to update the model of the AI and/or ML.

57. The apparatus of claim 54, wherein in case that the first assistance information comprises the ninth sub-assistance information, the first assistance information comprises:
fourth indication information, wherein the fourth indication information is used to indicate a reason why the terminal expects to use the AI and/or ML-based way, or the fourth indication information is used to indicate a reason why the terminal expects to use the non-AI and/or ML-based way.

58. The apparatus of claim 54, wherein in case that the first assistance information comprises the tenth sub-assistance information, the first assistance information comprises:
fifth indication information, wherein the fifth indication information is used to indicate a reason why the terminal expects to fall back the model of the AI and/or ML.

59. The apparatus of claim 54, wherein the seventh sub-assistance information comprises one or more of:
model identification information of the AI and/or ML expected or preferred by the terminal; or
model priority information of the AI and/or ML expected or preferred by the terminal.

60. The apparatus of claim 59, wherein the model identification information comprises one or more of:
a model identifier;
a functionality identifier;
a configuration identifier;
a model parameter;
model input information; or
model output information.

61. The apparatus of any of claims 49 to 60, wherein the first assistance information comprises:
sixth indication information, wherein the sixth indication information is used to indicate one or more use cases or sub use cases corresponding to the first assistance information.

62. An apparatus for reporting assistance information, comprising:
a receiving module, used for receiving first assistance information transmitted from a terminal, wherein the first assistance information comprises at least part of information required for implementing a model management procedure for an artificial intelligence (AI) and/or machine learning (ML).

63. The apparatus of claim 62, further comprising:
a configuration information transmitting module, used for, before receiving the first assistance information transmitted from the terminal, transmitting first configuration information to the terminal, wherein the first configuration information is configuration information required by the terminal to report the first assistance information to a network side device.

64. The apparatus of claim 63, wherein the first configuration information comprises one or more of:
first indication information, wherein the first indication information is used to indicate that the network side device supports reporting of the first assistance information; or
first timer information, wherein a first timer is used to control the terminal to report the first assistance information.

65. The apparatus of any of claims 62 to 64, wherein the first assistance information comprises one or more of:
first sub-assistance information, wherein the first sub-assistance information is used to characterize that the terminal expects to report data collected by the terminal;
second sub-assistance information, wherein the second sub-assistance information is used to characterize that the terminal expects a network side device to transmit data collected by the network side device;
third sub-assistance information, wherein the third sub-assistance information is used to characterize that the terminal expects to implement, at the terminal, a model training procedure, or the third sub-assistance information is used to characterize that the terminal expects to implement a model training procedure at a network side device;
fourth sub-assistance information, wherein the fourth sub-assistance information is used to characterize that the terminal expects to implement, at the terminal, a model monitoring procedure, or the fourth sub-assistance information is used to characterize that the terminal expects to implement a model monitoring procedure at a network side device;
fifth sub-assistance information, wherein the fifth sub-assistance information is used to characterize that the terminal expects to implement, at the terminal, a model update procedure, or the fifth sub-assistance information is used to characterize that the terminal expects to implement a model update procedure at a network side device;
sixth sub-assistance information, wherein the sixth sub-assistance information is used to characterize that the terminal expects to change a model of the AI and/or ML, or the sixth sub-assistance information is used to characterize that the terminal expects to activate a model of the AI and/or ML, or the sixth sub-assistance information is used to characterize that the terminal expects to deactivate a model of the AI and/or ML;
seventh sub-assistance information, wherein the seventh sub-assistance information is used to characterize model information of the AI and/or ML expected or preferred by the terminal;
eighth sub-assistance information, wherein the eighth sub-assistance information is used to characterize that the terminal expects to update a model of the AI and/or ML;
ninth sub-assistance information, wherein the ninth sub-assistance information is used to characterize that the terminal expects to use an AI and/or ML-based way, or the ninth sub-assistance information is used to characterize that the terminal expects to use a non-AI and/or ML-based way; or
tenth sub-assistance information, wherein the tenth sub-assistance information is used to characterize that the terminal expects to fall back a model of the AI and/or ML.

66. The apparatus of claim 65, wherein in case that the first assistance information comprises the sixth sub-assistance information, the first assistance information comprises:
second indication information, wherein the second indication information is used to indicate a reason why the terminal expects to change the model of the AI and/or ML, or a reason why the terminal expects to activate the model of the AI and/or ML, or a reason why the terminal expects to deactivate the model of the AI and/or ML.

67. The apparatus of claim 65, wherein in case that the first assistance information comprises the eighth sub-assistance information, the first assistance information comprises:
third indication information, wherein the third indication information is used to indicate a reason why the terminal expects to update the model of the AI and/or ML.

68. The apparatus of claim 65, wherein in case that the first assistance information comprises the ninth sub-assistance information, the first assistance information comprises:
fourth indication information, wherein the fourth indication information is used to indicate a reason why the terminal expects to use the AI and/or ML-based way, or the fourth indication information is used to indicate a reason why the terminal expects to use the non-AI and/or ML-based way.

69. The apparatus of claim 65, wherein in case that the first assistance information comprises the tenth sub-assistance information, the first assistance information comprises:
fifth indication information, wherein the fifth indication information is used to indicate a reason why the terminal expects to fall back the model of the AI and/or ML.

70. The apparatus of claim 65, wherein the seventh sub-assistance information comprises one or more of:
model identification information of the AI and/or ML expected or preferred by the terminal; or
model priority information of the AI and/or ML expected or preferred by the terminal.

71. The apparatus of claim 70, wherein the model identification information comprises one or more of:
a model identifier;
a functionality identifier;
a configuration identifier;
a model parameter;
model input information; or
model output information.

72. The apparatus of any of claims 62 to 71, wherein the first assistance information comprises:
sixth indication information, wherein the sixth indication information is used to indicate one or more use cases or sub use cases corresponding to the first assistance information.

73. A processor readable storage medium storing a computer program, wherein the computer program is used for causing a processor to perform any of the methods of claims 1 to 13.

74. A processor readable storage medium storing a computer program, wherein the computer program is used for causing a processor to perform any of the methods of claims 14 to 24.
